# EUROPEAN PATENT APPLICATION

(11) **EP 4 852 467 A1**
(43) Date of publication of application: **09.12.2026**
(21) Application number: 25767126.3
(22) Date of filing: 06.02.2025
(51) Int. Cl.: H04W 4/06

(54) **COMMUNICATION METHOD AND APPARATUS**

(30) Priority: 06.03.2024 CN 202410258263
(71) Applicant: HUAWEI TECHNOLOGIES CO., LTD., Shenzhen, Guangdong 518129 (CN)
(72) Inventor: WANG, Fanfan, Shenzhen, Guangdong 518129 (CN); HU, Xingxing, Shenzhen, Guangdong 518129 (CN); HAN, Feng, Shenzhen, Guangdong 518129 (CN); ZHANG, Haisen, Shenzhen, Guangdong 518129 (CN)
(74) Representative: Maiwald GmbH
(86) International application number: PCT/CN2025/076071
(87) International publication number: WO 2025/185382

(57) **Abstract**

This application provides a communication method and apparatus, relating to the field of communication technologies. In the method, a terminal may receive first information from a first cell, and determine, based on the first information, whether to process second information related to a first service. The first information indicates information about a first area. The first service is a public warning system service, and the second information is public warning information; or the first service is a multicast/broadcast service, and the second information indicates to receive information about the first service. According to the foregoing method, the terminal may determine, based on the information about the first area, whether the second information is information that the terminal expects to receive, and further determine whether to process the second information. Therefore, according to the foregoing method, the second information sent by a RAN node is applicable to a terminal in the first area.

## Description

This application claims priority to Chinese Patent Application No. 202410258263.6, filed with the China National Intellectual Property Administration on March 6, 2024 and entitled "COMMUNICATION METHOD AND APPARATUS", which is incorporated herein by reference in its entirety.

### TECHNICAL FIELD

This application relates to the field of communication technologies, and in particular, to a communication method and apparatus.

### BACKGROUND

A non-terrestrial network (non-terrestrial network, NTN) may participate in network deployment by using communication apparatuses located at a specific altitude above the ground, such as satellites or high-altitude platforms (high-altitude platforms, HPAs), to assist radio access network (radio access network, RAN) nodes in communicating with terminals. Compared with a terrestrial network (terrestrial network, TN), RAN nodes in an NTN can provide much wider coverage. For example, in a TN, the coverage radius of a single station is usually less than or equal to 3 km, whereas in an NTN, the beam footprint of a satellite is usually greater than or equal to 100 km. The enlarged coverage of the RAN node may cause the RAN node to fail to accurately send broadcast or multicast messages that a terminal expects to receive.

### SUMMARY

This application provides a communication method and apparatus, enabling a RAN node to accurately send broadcast or multicast messages that a terminal expects to receive.

To achieve the foregoing objective, the following technical solutions are used in this application.

According to a first aspect, a communication method is provided. The method may be performed by a terminal. The terminal herein may refer to the terminal, or may refer to a processor, a circuit, a module, a logical node, a chip, a chip system, or the like that is in the terminal and that implements the method.

The method includes: receiving first information from a first cell, where the first information indicates information about a first area; and determining, based on the information about the first area, whether to process second information related to a first service, where the first service is a public warning system service, and the second information is public warning information; or the first service is a multicast/broadcast service, and the second information indicates to receive information about the first service.

Based on the method provided in the first aspect, the terminal may determine, based on the information about the first area, whether to process the second information. For example, if the terminal determines, based on the information about the first area, that the terminal expects to receive the second information, the terminal processes the second information; or if the terminal determines, based on the information about the first area, that the terminal does not expect to receive the second information, the terminal does not process the second information. Therefore, according to the foregoing method, the second information sent by a first RAN node (that is, a RAN node to which the first cell belongs) is applicable to a terminal in the first area. In other words, after receiving the second information, terminals in different areas have different behaviors, so that the terminal processes a message that the terminal expects to receive, and does not process a message that the terminal does not expect to receive. It may be understood that, if the first service is a public warning system service, the first RAN node may flexibly make an application scope of the public warning information effective by indicating the information about the first area to the terminal. If the first service is a multicast/broadcast service, the first RAN node may indicate the information about the first area to the terminal, so that the terminal receives a multicast/broadcast service in which the terminal is interested, thereby improving user experience.

In a possible implementation, the first area includes one or more areas in at least one cell, and the at least one cell includes the first cell.

Based on the foregoing possible implementation, a cell may be divided into areas with a finer granularity, so that terminals in different areas in a same cell may have different processing manners for same information, thereby improving user experience. For example, the first cell includes an area 1 and an area 2. A terminal located in the area 1 may process the second information, and a terminal located in the area 2 may not process the second information.

In a possible implementation, any area of the one or more areas in the first cell is an area covered by a beam of the first cell, or is a geographical area covered by the first cell.

Based on the foregoing possible implementation, the first cell may be divided into areas at a granularity of a beam, or the first cell may be divided into areas at a granularity of a geographical area, for example, an administrative region, to enrich a manner of dividing an area in a cell.

In a possible implementation, the first service is the public warning system service, and the determining, based on the first area, whether to process the second information related to the first service includes: if a terminal is located in the first area, processing the second information, where the processing includes at least one of receiving, storing, assembling, or forwarding to a higher layer; or if a terminal is not located in the first area, discarding the second information.

Based on the foregoing possible implementation, if the terminal is located in the first area, the terminal may process the second information, to avoid a threat to personal and property security of a user; or if the terminal is not located in the first area, the terminal may discard the second information, to avoid occurrence of a false alarm and impact on user experience.

In a possible implementation, the first service is the public warning system service, and the first information and the second information are sent via a system information block 6, a system information block 7, or a system information block 8.

Based on the foregoing possible implementation, the terminal may receive the first information and the second information via the system information block 6, the system information block 7, or the system information block 8. For example, when the second information includes an earthquake and tsunami warning system (earthquake and tsunami warning system, ETWS) primary notification, the first information and the second information are sent via the system information block 6; when the second information includes an ETWS secondary notification, the first information and the second information are sent via the system information block 7; and when the second information includes a commercial mobile alert system (commercial mobile alert system, CMAS) notification, the first information and the second information are sent via the system information block 8.

In a possible implementation, the first service is the multicast/broadcast service, and the first information and the second information are sent via a system information block 20, a system information block 21, or a multicast/broadcast service control channel change notification.

Based on the foregoing possible implementation, the terminal may receive the first information and the second information via the system information block 20, the system information block 21, or the multicast/broadcast service control channel change notification.

In a possible implementation, the first information and the second information are sent via the system information block 20, and the second information is multicast/broadcast service control channel configuration information; and the determining, based on the information about the first area, whether to process the second information related to the first service includes: if a terminal is located in the first area, processing the second information; and the processing the second information includes: receiving multicast/broadcast service broadcast configuration information based on the second information.

Based on the foregoing possible implementation, if the terminal is located in the first area, the terminal may receive the multicast/broadcast service broadcast configuration information based on the second information, and further receive the information about the first service, for example, multicast/broadcast service data, based on the configuration information.

In a possible implementation, the multicast/broadcast service broadcast configuration information includes information about a second area, where the second area is an area associated with a multicast/broadcast service session supported by a serving cell and/or a neighboring cell; and the method further includes: if a second area of a reselected cell does not include the first area, entering a connected state and requesting to receive data in a unicast mode.

Based on the foregoing possible implementation, if the second area of the cell reselected by the terminal does not include the first area, the terminal may enter the connected state and request to receive data in a unicast mode. For example, the terminal enters a radio resource control (radio resource control, RRC) connected state and requests to receive, in a unicast mode, service data of a multicast/broadcast service associated with the first area, so as to avoid failure in receiving the service data by the terminal after the terminal accesses the reselected cell.

In a possible implementation, the first information and the second information are sent via the system information block 21, and the second information indicates a frequency of a multicast/broadcast service supported by the first area; and the determining, based on the information about the first area, whether to process the second information related to the first service includes: if a terminal is located in the first area, processing the second information; and the processing the second information includes: setting the frequency of the multicast/broadcast service supported by the first area as a highest priority during cell reselection.

Based on the foregoing possible implementation, if the terminal is located in the first area, the terminal considers a multicast/broadcast service frequency priority during cell reselection, so that the terminal reselects a cell that supports the multicast/broadcast service, thereby ensuring continuity of the multicast/broadcast service.

It may be understood that, in a specific application, the second information may alternatively indicate multicast/broadcast service frequency information. The multicast/broadcast service frequency information may be understood as one or more pieces of frequency information that supports a multicast/broadcast service, or one or more pieces of frequency information that provides multicast/broadcast service data. The first information may alternatively indicate a third area corresponding to the multicast/broadcast service frequency. When the terminal is located in the first area, and during cell reselection, if the third area includes the first area, the terminal may set the MBS frequency as the highest priority. In other words, during cell reselection, the terminal considers a priority of an MBS frequency that supports the first area, so that the terminal reselects a cell that supports an MBS service, thereby ensuring continuity of the MBS service. When the terminal is located in the first area, if the third area does not include the first area, the terminal does not set the MBS frequency as the highest priority, or the terminal does not adjust a priority of the MBS frequency, or the terminal sets a priority of the MBS frequency to a lowest priority. In other words, during cell reselection, the terminal does not consider a priority of an MBS frequency that does not support the first area.

In a possible implementation, the first information and the second information are sent via the multicast/broadcast service control channel change notification, and the second information indicates that a change in multicast/broadcast service control channel configuration information, and/or indicates that a change in an area for receiving multicast/broadcast service control channel configuration information; and the determining, based on the information about the first area, whether to process the second information related to the first service includes: if a terminal is located in the first area, processing the second information; and the processing the second information includes: receiving updated multicast/broadcast service control channel configuration information.

Based on the foregoing possible implementation, if the terminal is located in the first area, the terminal may receive the updated multicast/broadcast service control channel configuration information, so that the terminal receives multicast/broadcast service broadcast configuration information based on the updated multicast/broadcast service control channel configuration information, and receives broadcast service data based on the multicast/broadcast service broadcast configuration information.

In a possible implementation, the first service is the multicast/broadcast service, and the method further includes: if the terminal leaves the first area, stopping receiving the information about the first service.

Based on the foregoing possible implementation, after leaving the first area, the terminal may stop receiving the information about the first service, so as to avoid receiving information that the terminal does not expect to receive. For example, the first service is a weather forecast service in the first area. After leaving the first area, the terminal may stop receiving the weather forecast of the first area.

According to a second aspect, a communication method is provided. The method may be performed by a first RAN node. The first RAN node herein may refer to the first RAN node, or may refer to a processor, a circuit, a module, a logical node, a chip, a chip system, or the like that is in the first RAN node and that implements the method.

The method includes: obtaining information about a first area; and sending first information of a first cell and second information related to a first service to a terminal, where the first information indicates the information about the first area, and the first information is used by the terminal to determine whether to process the second information; and the first service is a public warning system service, and the second information is public warning information; or the first service is a multicast/broadcast service, and the second information indicates to receive information about the first service.

Based on the method provided in the second aspect, the first RAN node may indicate the information about the first area to a terminal, so that the terminal determines, based on the information about the first area, whether to process the second information. For example, if the terminal determines, based on the information about the first area, that the terminal expects to receive the second information, the terminal processes the second information; or if the terminal determines, based on the information about the first area, that the terminal does not expect to receive the second information, the terminal does not process the second information. Therefore, according to the foregoing method, the second information sent by the first RAN node is applicable to a terminal in the first area. In other words, after receiving the second information, terminals in different areas have different behaviors, so that the terminal processes a message that the terminal expects to receive, and does not process a message that the terminal does not expect to receive. It may be understood that, if the first service is a public warning system service, the first RAN node may flexibly make an application scope of the public warning information effective by indicating the information about the first area to the terminal. If the first service is a multicast/broadcast service, the first RAN node may indicate the information about the first area to the terminal, so that the terminal receives a multicast/broadcast service in which the terminal is interested, thereby improving user experience.

In a possible implementation, the first area includes one or more areas in at least one cell, and the at least one cell includes the first cell.

Based on the foregoing possible implementation, a cell may be divided into areas with a finer granularity, so that terminals in different areas in a same cell may have different processing manners for same information, thereby improving user experience. For example, the first cell includes an area 1 and an area 2. A terminal located in the area 1 may process the second information, and a terminal located in the area 2 may not process the second information.

In a possible implementation, any area of the one or more areas in the first cell is an area covered by a beam of the first cell, or is a geographical area covered by the first cell.

Based on the foregoing possible implementation, the first cell may be divided into areas at a granularity of a beam, or the first cell may be divided into areas at a granularity of a geographical area, for example, an administrative region, to enrich a manner of dividing an area in a cell.

In a possible implementation, the obtaining the information about the first area includes: receiving the information about the first area from a core network element; or receiving the information about the first area from a second RAN node.

Based on the foregoing possible implementation, the first RAN node may receive the information about the first area from a core network or the second RAN node different from the first RAN node, to be applicable to different communication scenarios. For example, in a handover scenario, the first RAN node may receive the information about the first area from the second RAN node. In a non-handover scenario, the first RAN node may receive the information about the first area from the core network.

In a possible implementation, the first service is the multicast/broadcast service, and the method further includes: sending multicast/broadcast service broadcast configuration information to the terminal, where the multicast/broadcast service broadcast configuration information includes information about a second area, and the second area is an area associated with a multicast/broadcast service session supported by a serving cell and/or a neighboring cell.

Based on the foregoing possible implementation, the first RAN node may include the information about the second area in the multicast/broadcast service broadcast configuration information, so that the terminal determines whether to enter the connected state and request to receive data in a unicast mode. For example, if a second area of a cell reselected by the terminal does not include the first area, the terminal may enter the connected state and request to receive data in a unicast mode. For example, the terminal enters an RRC connected state and request to receive, in a unicast mode, service data of a multicast/broadcast service associated with the first area, so as to avoid failure in receiving the service data by the terminal after the terminal accesses the reselected cell.

In a possible implementation, the first service is the multicast/broadcast service, and the first information and the second information are sent via a system information block 20, a system information block 21, or a multicast/broadcast service control channel change notification.

Based on the foregoing possible implementation, when the first service is a multicast/broadcast service, the first RAN node may send the first information and the second information to the terminal via the system information block 20, the system information block 21, or the multicast/broadcast service control channel change notification.

In a possible implementation, the first service is the public warning service, and the first information and the second information are sent via a system information block 6, a system information block 7, or a system information block 8.

Based on the foregoing possible implementation, when the first service is the public warning service, the first RAN node may send the first information and the second information to the terminal via a system information block 6, a system information block 7, or a system information block 8. For example, when the second information includes an ETWS primary notification, the first information and the second information are sent via the system information block 6; when the second information includes an ETWS secondary notification, the first information and the second information are sent via the system information block 7; or when the second information includes a CMAS notification, the first information and the second information are sent via the system information block 8.

According to a third aspect, a communication method is provided. The method may be performed by a first node. The first node herein may refer to the first node, or may refer to a processor, a circuit, a module, a logical node, a chip, a chip system, or the like that is in the first node and that implements the method. For example, the first node is a second RAN node or an access and mobility management network element.

The method includes: determining information about a first area, and sending the information about the first area to a first RAN node. The information about the first area is used by a terminal to determine whether to process second information related to a first service. The first service is a public warning system service, and the second information is public warning information; or the first service is a multicast/broadcast service, and the second information indicates to receive information about the first service.

Based on the method provided in the third aspect, the first node may send the information about the first area to the first RAN node, so that the first RAN node sends the information about the first area to the terminal, and the terminal may determine, based on the information about the first area, whether to process the second information. For example, if the terminal determines, based on the information about the first area, that the terminal expects to receive the second information, the terminal processes the second information; or if the terminal determines, based on the information about the first area, that the terminal does not expect to receive the second information, the terminal does not process the second information.

In a possible implementation, the first area includes one or more areas in at least one cell, and the at least one cell includes the first cell.

Based on the foregoing possible implementation, a cell may be divided into areas with a finer granularity, so that terminals in different areas in a same cell may have different processing manners for same information, thereby improving user experience. For example, the first cell includes an area 1 and an area 2. A terminal located in the area 1 may process the second information, and a terminal located in the area 2 may not process the second information.

In a possible implementation, any area of the one or more areas in the first cell is an area covered by a beam of the first cell, or is a geographical area covered by the first cell.

Based on the foregoing possible implementation, the first cell may be divided into areas at a granularity of a beam, or the first cell may be divided into areas at a granularity of a geographical area, for example, an administrative region, to enrich a manner of dividing an area in a cell.

In a possible implementation, the method further includes: when the first RAN node is about to cover the first area, sending third information to the first RAN node, where the third information is used to request the first RAN node to set up a resource related to the first service.

Based on the foregoing possible implementation, the first RAN node can obtain the third information before the first RAN node covers the first area, and set up the resource related to the first service. In this way, the first RAN node can obtain the information about the first service in time, thereby reducing a delay in sending the information about the first service to the terminal.

In a possible implementation, the sending the information about the first area to the first RAN node includes: when the first RAN node is about to cover the first area, sending the information about the first area to the first RAN node.

Based on the foregoing possible implementation, the first RAN node may obtain the information about the first area before covering the first area, so that the first RAN node processes the first service in time.

According to a fourth aspect, a communication method is provided. The method may be performed by a second RAN node. The second RAN node herein may refer to the second RAN node, or may refer to a processor, a circuit, a module, a logical node, a chip, a chip system, or the like that is in the second RAN node and that implements the method.

The method includes: when a first area is to be covered, obtaining information about a multicast/broadcast service, and setting up or modifying a resource of the multicast/broadcast service. The information about the multicast/broadcast service indicates information about a first area and information about a first session associated with the first area, and the first session is a session of the multicast/broadcast service.

Based on the method provided in the fourth aspect, the second RAN node may obtain the information about the multicast/broadcast service in advance, and set up or modify the resource of the multicast/broadcast service. Therefore, when covering the first area, the second RAN node can provide multicast/broadcast service data for the terminal in time, thereby reducing a delay in receiving the data by the terminal, ensuring continuity of the multicast/broadcast service, and improving user experience.

In a possible implementation, the first area includes at least one cell or tracking area; or the first area includes one or more areas in at least one cell.

Based on the foregoing possible implementation, the first area may be an area at a cell granularity, or an area at a finer granularity than a cell granularity.

In a possible implementation, the at least one cell includes a first cell, and any area of the one or more areas in the first cell is an area covered by a beam of the first cell, or is a geographical area covered by the first cell.

Based on the foregoing possible implementation, the first cell may be divided into areas at a granularity of a beam, or the first cell may be divided into areas at a granularity of a geographical area, for example, an administrative region, to enrich a manner of dividing an area in a cell.

In a possible implementation, the obtaining the information about the multicast/broadcast service includes: receiving the information about the multicast/broadcast service from a core network element; or receiving the information about the multicast/broadcast service from a first RAN node.

Based on the foregoing possible implementation, the second RAN node may receive the information about the multicast/broadcast service from a core network, or receive the information about the multicast/broadcast service from the first RAN node different from the second RAN node, to be applicable to different communication scenarios. For example, in a handover scenario, the second RAN node receives the information about the multicast/broadcast service from the first RAN node. In a non-handover scenario, the second RAN node receives the information about the multicast/broadcast service from the core network.

In a possible implementation, after the receiving the information about the multicast/broadcast service from the first RAN node, the method further includes: sending request information of the first session to the core network element.

Based on the foregoing possible implementation, setup or modification of the resource of the multicast/broadcast service may be triggered.

In a possible implementation, the information about the first session is sent via a multicast/broadcast service session setup/modification request message.

According to a fifth aspect, a communication method is provided. The method may be performed by a first RAN node. The first RAN node herein may refer to the first RAN node, or may refer to a processor, a circuit, a module, a logical node, a chip, a chip system, or the like that is in the first RAN node and that implements the method.

The method includes: determining a first area associated with a first session, where the first session is a session of a multicast/broadcast service; and when a second RAN node is about to cover the first area, sending information about the multicast/broadcast service to the second RAN node. The information about the multicast/broadcast service indicates information about the first area and information about the first session, and the information about the multicast/broadcast service is used to set up or modify a resource of the multicast/broadcast service.

Based on the method provided in the fifth aspect, the second RAN node may obtain the information about the multicast/broadcast service in advance, and set up or modify the resource of the multicast/broadcast service. Therefore, when covering the first area, the second RAN node can provide multicast/broadcast service data for the terminal in time, thereby reducing a delay in receiving the data by the terminal, ensuring continuity of the multicast/broadcast service, and improving user experience.

In a possible implementation, the first area includes at least one cell or tracking area; or the first area includes one or more areas in at least one cell.

Based on the foregoing possible implementation, the first area may be an area at a cell granularity, or an area at a finer granularity than a cell granularity.

In a possible implementation, the at least one cell includes a first cell, and any area of the one or more areas in the first cell is an area covered by a beam of the first cell, or is a geographical area covered by the first cell.

Based on the foregoing possible implementation, the first cell may be divided into areas at a granularity of a beam, or the first cell may be divided into areas at a granularity of a geographical area, for example, an administrative region, to enrich a manner of dividing an area in a cell.

In a possible implementation, the information about the multicast/broadcast service is sent via a multicast/broadcast service session setup/modification request message.

According to a sixth aspect, a communication method is provided. The method may be performed by a terminal. The terminal herein may refer to the terminal, or may refer to a processor, a circuit, a module, a logical node, a chip, a chip system, or the like that is in the terminal and that implements the method.

The method includes: determining first indication information, and sending the first indication information to a RAN node. The first indication information indicates multicast/broadcast service interest indication information corresponding to a first area, for example, may indicate a multicast/broadcast service that the terminal in the first area is interested in.

Based on the method provided in the sixth aspect, the terminal may report, to the RAN node, the multicast/broadcast service that the terminal in the first area is interested in, so that the RAN node sends, to the terminal based on an indication of the terminal, multicast/broadcast service data that the terminal is interested in. Therefore, the foregoing method can meet differentiated requirements of the terminal, in different areas, for the multicast/broadcast service, thereby improving user experience and efficiency of the multicast/broadcast service.

In a possible implementation, the first area includes at least one cell or tracking area; or the first area includes one or more areas in at least one cell.

Based on the foregoing possible implementation, the first area may be an area at a cell granularity, or an area at a finer granularity than a cell granularity.

In a possible implementation, the at least one cell includes a first cell, and any area of the one or more areas in the first cell is an area covered by a beam of the first cell, or is a geographical area covered by the first cell.

Based on the foregoing possible implementation, the first cell may be divided into areas at a granularity of a beam, or the first cell may be divided into areas at a granularity of a geographical area, for example, an administrative region, to enrich a manner of dividing an area in a cell.

In a possible implementation, the method further includes: receiving second indication information from the RAN node, where the second indication information indicates information about the first area.

Based on the foregoing possible implementation, the terminal may determine the first area, so that the terminal sends the first indication information to the RAN node when entering the first area.

In a possible implementation, the second indication information is sent via a system information block 21.

Based on the foregoing possible implementation, the terminal may receive the second indication information via the system information block 21.

In a possible implementation, the sending the first indication information to the RAN node includes: when entering the first area, sending the first indication information to the RAN node.

According to a seventh aspect, a communication method is provided. The method may be performed by a RAN node. The RAN node herein may refer to the RAN node, or may refer to a processor, a circuit, a module, a logical node, a chip, a chip system, or the like that is in the RAN node and that implements the method.

The method includes: receiving first indication information from a terminal, where the first indication information indicates multicast/broadcast service interest indication information corresponding to a first area, for example, indicates a multicast/broadcast service that the terminal in the first area is interested in; and sending multicast/broadcast service data to the terminal based on the first indication information.

Based on the method provided in the seventh aspect, the RAN node sends, to the terminal based on an indication of the terminal, multicast/broadcast service data that the terminal is interested in. Therefore, the foregoing method can meet differentiated requirements of the terminal, in different areas, for the multicast/broadcast service, thereby improving user experience and efficiency of the multicast/broadcast service.

In a possible implementation, the first area includes at least one cell or tracking area; or the first area includes one or more areas in at least one cell.

Based on the foregoing possible implementation, the first area may be an area at a cell granularity, or an area at a finer granularity than a cell granularity.

In a possible implementation, the at least one cell includes a first cell, and any area of the one or more areas in the first cell is an area covered by a beam of the first cell, or is a geographical area covered by the first cell.

Based on the foregoing possible implementation, the first cell may be divided into areas at a granularity of a beam, or the first cell may be divided into areas at a granularity of a geographical area, for example, an administrative region, to enrich a manner of dividing an area in a cell.

In a possible implementation, the method further includes: sending second indication information to the terminal, where the second indication information indicates information about the first area.

Based on the foregoing possible implementation, the terminal may determine the first area, and further send the first indication information to the RAN node when entering the first area.

In a possible implementation, the second indication information is sent via a system information block 21.

Based on the foregoing possible implementation, the RAN node may send the first indication information to the terminal via the system information block 21.

According to an eighth aspect, a communication apparatus is provided, to implement the foregoing method. The communication apparatus may be the terminal in the first aspect; or the communication apparatus may be the first RAN node in the second aspect; or the communication apparatus may be the first node in the third aspect; or the communication apparatus may be the second RAN node in the fourth aspect; or the communication apparatus may be the first RAN node in the fifth aspect; or the communication apparatus may be the terminal in the sixth aspect; or the communication apparatus may be the RAN node in the seventh aspect. The communication apparatus includes a corresponding module, unit, or means (means) for implementing the foregoing method. The module, unit, or means may be implemented by hardware or software, or implemented by hardware executing corresponding software. The hardware or the software includes one or more modules or units corresponding to the foregoing functions.

In a possible implementation, the communication apparatus may include a processing module and an interface module. The processing module may be configured to implement a processing function according to any one of the foregoing aspects and the possible implementations of the foregoing aspects. The processing module may be, for example, a processor. The interface module may also be referred to as an interface unit, and is configured to implement a sending function and/or a receiving function according to any one of the foregoing aspects and the possible implementations of the foregoing aspects. The interface module may include an interface circuit, a transceiver machine, a transceiver, or a communication interface.

In a possible implementation, the interface module includes a sending module and a receiving module, respectively configured to implement sending and receiving functions according to any one of the foregoing aspects and the possible implementations of the foregoing aspects.

According to a ninth aspect, a communication apparatus is provided and includes a processor. The processor is configured to cause, by executing a computer program (or computer-executable instructions) stored in a memory and/or by using a logic circuit, the communication apparatus to perform the method according to any one of the foregoing aspects. The communication apparatus may be the terminal in the first aspect; or the communication apparatus may be the first RAN node in the second aspect; or the communication apparatus may be the first node in the third aspect; or the communication apparatus may be the second RAN node in the fourth aspect; or the communication apparatus may be the first RAN node in the fifth aspect; or the communication apparatus may be the terminal in the sixth aspect; or the communication apparatus may be the RAN node in the seventh aspect. Optionally, there may be one or more processors.

In a possible implementation, the communication apparatus further includes a memory.

In a possible implementation, the processor and the memory are integrated together; or the memory is independent of the processor.

In a possible implementation, the communication apparatus further includes a communication interface. The communication interface is configured for the communication apparatus to communicate with another device, for example, send or receive data and/or a signal. For example, the communication interface may be a transceiver, a circuit, a bus, a module, or another type of communication interface.

In a possible implementation, the processor and/or the memory further include an artificial intelligence (artificial intelligence, AI) module, configured to implement an AI-related function. The AI module may implement an AI function by using software, hardware, or a combination of software and hardware. For example, the AI module includes a radio access network (radio access network, RAN) intelligent controller (RAN intelligent controller, RIC) module. For example, the AI module may be a near-real-time RIC or a non-real-time RIC.

In a possible implementation, the communication apparatus is a chip or a chip system. Optionally, when the communication apparatus is the chip system, the communication apparatus may include a chip, or may include a chip and another discrete component.

According to a tenth aspect, a communication apparatus is provided and includes a processor and an interface circuit. The interface circuit is configured to receive a computer program or instructions, and transmit the computer program or the instructions to the processor. The processor is configured to execute the computer program or the instructions, to cause the communication apparatus to perform the method according to any one of the foregoing aspects. The communication apparatus may be the terminal in the first aspect; or the communication apparatus may be the first RAN node in the second aspect; or the communication apparatus may be the first node in the third aspect; or the communication apparatus may be the second RAN node in the fourth aspect; or the communication apparatus may be the first RAN node in the fifth aspect; or the communication apparatus may be the terminal in the sixth aspect; or the communication apparatus may be the RAN node in the seventh aspect. Optionally, there may be one or more processors.

In a possible implementation, the processor further includes an AI module, configured to implement an AI-related function. The AI module may implement an AI function by using software, hardware, or a combination of software and hardware. For example, the AI module includes an RIC module. For example, the AI module may be a near-real-time RIC or a non-real-time RIC.

In a possible implementation, the communication apparatus is a chip or a chip system. Optionally, when the communication apparatus is the chip system, the communication apparatus may include a chip, or may include a chip and another discrete component.

According to an eleventh aspect, a computer-readable storage medium is provided. The computer-readable storage medium stores instructions. When the instructions are run on a computer, the computer is caused to perform the method according to any one of the foregoing aspects.

According to a twelfth aspect, a computer program product including instructions is provided. When the computer program product is run on a computer, the computer is caused to perform the method according to any one of the foregoing aspects.

According to a thirteenth aspect, a communication system is provided. The communication system includes a terminal configured to perform the method according to the first aspect and a first RAN node configured to perform the method according to the second aspect.

In a possible implementation, the communication system further includes a first node configured to perform the method according to the third aspect.

According to a fourteenth aspect, a communication system is provided. The communication system includes a second RAN node configured to perform the method according to the fourth aspect and a first RAN node configured to perform the method according to the fifth aspect.

According to a fifteenth aspect, a communication system is provided. The communication system includes a terminal configured to perform the method according to the sixth aspect and a RAN node configured to perform the method according to the seventh aspect.

For technical effects brought by any one of the possible implementations in the eighth aspect to the fifteenth aspect, refer to the technical effects brought by any one of the first aspect to the seventh aspect or different possible implementations in any aspect. Details are not described herein again.

It may be understood that the solutions in the foregoing aspects may be combined if the solutions are not contradictory.

### BRIEF DESCRIPTION OF DRAWINGS

FIG. 1A is a diagram 1 of structures of a central unit (central unit, CU) and a distributed unit (distributed unit, DU);
FIG. 1B is a diagram 2 of structures of a CU and a DU;
FIG. 1C is a diagram of an architecture of an open radio access network (open radio access network, O-RAN);
FIG. 1D is a diagram of transmission of a multicast/broadcast service (multicast/broadcast service, MBS);
FIG. 1E is a diagram 1 of a network architecture of an NTN;
FIG. 1F is a diagram 2 of a network architecture of an NTN;
FIG. 1G is a diagram 3 of a network architecture of an NTN;
FIG. 1H is a diagram 4 of a network architecture of an NTN;
FIG. 2 is a diagram of an architecture of a communication system according to this application;
FIG. 3 is a diagram of a hardware structure of a communication apparatus according to this application;
FIG. 4 is a schematic flowchart 1 of a communication method according to this application;
FIG. 5 is a diagram of a first area and a second area according to this application;
FIG. 6 is a schematic flowchart 2 of a communication method according to this application;
FIG. 7 is a schematic flowchart 3 of a communication method according to this application; and
FIG. 8 is a diagram of a structure of a communication apparatus according to this application.

### DESCRIPTION OF EMBODIMENTS

Before technical solutions of this application are described, related technical terms in this application are described. It may be understood that the descriptions are intended to make this application easier to understand, but should not be construed as a limitation on the protection scope claimed in this application.

### 1. Terminal

In this application, the terminal may be a device having a wireless transceiver function. The terminal may be deployed on land, including an indoor terminal, an outdoor terminal, a handheld terminal, or a vehicle-mounted terminal; or may be deployed on water (for example, on a ship); or may be deployed in the air (for example, on an airplane, a balloon, and a satellite). The terminal may also be referred to as a terminal device. The terminal device may be user equipment (user equipment, UE), a mobile station (mobile station, MS), a mobile terminal (mobile terminal, MT), or the like, or may be a device configured to provide voice or data connectivity for a user. The UE includes a handheld device, a vehicle-mounted device (for example, a car, a bicycle, an electric vehicle, an airplane, a ship, a train, or a high-speed train), a wearable device (for example, a smartwatch, a smart band, or a pedometer), or a compute device that has a wireless communication function. For example, the UE may be a mobile phone (mobile phone), a tablet computer, a notebook computer, a palmtop computer, a mobile internet device (mobile internet device, MID), a satellite terminal, or a computer having a wireless transceiver function. The UE may alternatively be a virtual reality (virtual reality, VR) terminal device, an augmented reality (augmented reality, AR) terminal device, a wireless modem (modem), a smart point of sale (point of sale, POS) machine, customer-premises equipment (customer premises equipment, CPE), a smart robot, a robot arm, a workshop device, a smart home device (for example, a refrigerator, a television, an air conditioner, or an electric meter), a wireless terminal in industrial control, a wireless terminal in self-driving, a wireless terminal in telemedicine, a wireless terminal in a smart grid (smart grid), a wireless terminal in transportation security, a wireless terminal in smart transportation, a wireless terminal in a smart city (smart city), a wireless terminal in a smart home (smart home), a vehicle-mounted terminal, a road side unit (road side unit, RSU) having a terminal function, a flight device (for example, a smart robot, a hot air balloon, an uncrewed aerial vehicle, or an airplane), or the like. The terminal may alternatively be another device having a terminal function. For example, the terminal may alternatively be a device that functions as a terminal in D2D communication.

By way of example rather than limitation, the terminal in this application may be a wearable device. The wearable device may also be referred to as a wearable intelligent device, and is a general term of a wearable device that is intelligently designed and developed for daily wear by using a wearable technology, for example, glasses, gloves, a watch, clothing, and shoes. The wearable device is a portable device that can be directly worn on the body or integrated into clothes or an accessory of a user. For example, the wearable device is not only a hardware device, but also a device that implements a powerful function through software support, data exchange, and cloud interaction. In a broad sense, wearable intelligent devices include full-featured and large-sized devices that can implement all or some functions without depending on smartphones, for example, smartwatches or smart glasses, and include devices that are dedicated to only one type of application function and need to collaboratively work with other devices such as smartphones, for example, various smart bands or smart jewelry for monitoring physical signs.

In this application, the terminal may be a terminal in an internet of things (internet of things, IoT) system. IoT is an important component in development of future information technologies. A main technical feature of the IoT is to connect an object to a network by using a communication technology, to implement an intelligent network of human-machine interconnection and thing-thing interconnection. The terminal in this application may be a terminal in machine type communication (machine type communication, MTC).

The terminal in this application may be a vehicle-mounted module, a vehicle-mounted assembly, a vehicle-mounted component, a vehicle-mounted chip, an on-board unit (on-board unit, OBU), or a telematics box (telematics box, T-BOX) that is built in a vehicle as one or more components or units. The vehicle may implement a method in this application via the built-in vehicle-mounted module, vehicle-mounted assembly, vehicle-mounted component, vehicle-mounted chip, on-board unit, or T-BOX. The terminal may alternatively be an entire vehicle apparatus. Therefore, this application may be applied to an internet of vehicles, for example, vehicle-to-everything (vehicle-to-everything, V2X), long term evolution-vehicle (long term evolution-vehicle, LTE-V), and vehicle-to-vehicle (vehicle-to-vehicle, V2V).

### 2. RAN node

In this application, the RAN node may be a device having a wireless transceiver function, and may help a terminal implement radio access. For example, the RAN node is a node in a RAN, and may also be referred to as an access network device, a RAN entity, an access node, a network device, or the like.

In a possible scenario, the RAN node includes but is not limited to: an evolved NodeB (NodeB, eNB, or e-NodeB, evolved NodeB) in long term evolution (long term evolution, LTE), an evolved NodeB in next generation LTE (next generation eNB, ng-eNB), a gNodeB (gNodeB or gNB) in new radio (new radio, NR), a transmitting point (transmitting point, TP) or a transmission reception point (transmission receiving point/transmission reception point, TRP), a base station evolved after a 3rd generation partnership project (3rd generation partnership project, 3GPP), a next generation NodeB (next generation NodeB, gNB), a 6th generation (6th generation, 6G) mobile communication system, a next generation base station in a communication system evolved after a 5th generation (5th generation, 5G), a base station in a future mobile communication system, a satellite, an access point (access point, AP) in a wireless fidelity (wireless fidelity, Wi-Fi) system, a wireless relay node, a wireless backhaul node, an integrated access and backhaul (integrated access and backhaul, IAB) node, or a network device in a mobile switching center NTN communication system. In other words, all or some functions of the RAN node may be deployed on a high-altitude platform or a satellite. The base station may be a macro base station, an indoor base station, a micro base station, a pico base station, a small cell, a relay station, a balloon station, or the like. A plurality of base stations may support networks of a same technology mentioned above, or may support networks of different technologies mentioned above. The base station may include one or more co-site or non-co-site TRPs. The RAN node may alternatively be a device that has functions as a base station in device to device (device to device, D2D) communication, vehicle to everything communication, uncrewed aerial vehicle communication, or machine communication. The RAN node may alternatively be a radio controller in a cloud radio access network (cloud radio access network, CRAN) scenario.

In another possible scenario, a plurality of RAN nodes collaborate to assist the terminal in implementing radio access, and different RAN nodes respectively implement a part of functions of the base station. For example, the RAN node may be a CU, a DU, a CU-control plane (control plane, CP), a CU-user plane (user plane, UP), a radio unit (radio unit, RU), a road side unit (road side unit, RSU) having a base station function, a wired access gateway, or a core network (core network, CN) network element. The RAN node may alternatively be a server, a wearable device, a machine communication device, a vehicle-mounted device, or the like. For example, an access network device in a V2X technology may be an RSU. An example in which the RAN node is a base station is used below for description. The plurality of RAN nodes may be base stations of a same type, or may be base stations of different types. The base station may communicate with the terminal, or may communicate with the terminal via a relay station. The terminal may communicate with a plurality of base stations using different technologies. For example, the terminal may communicate with a base station supporting an LTE network, or may communicate with a base station supporting a 5G network, or may support dual connectivity to a base station in an LTE network and a base station in a 5G network.

In this application, the CU and the DU may be separately disposed, or may be included in a same network element, for example, a baseband unit (baseband unit, BBU). The RU may be included in a radio frequency device or a radio frequency unit, for example, included in a remote radio unit (remote radio unit, RRU), an active antenna unit (active antenna unit, AAU), or a remote radio head (remote radio head, RRH). It may be understood that the CU may be classified as a network device in an access network, or the CU may be classified as a network device in a core network. This is not limited herein.

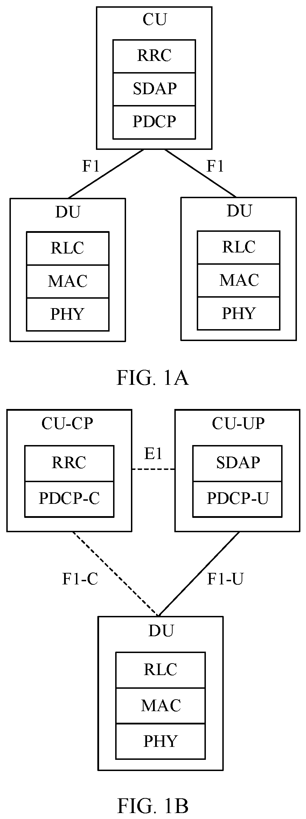

In some scenarios, the CU and the DU split protocol layers of the base station. Functions of some protocol layer are centrally controlled by the CU, and functions of some or all of the remaining protocol layers are distributed in the DU, and the CU centrally controls the DU. In an implementation, a radio resource control (radio Resource Control, RRC) layer, a packet data convergence protocol (packet data convergence protocol, PDCP) layer, and a service data adaptation protocol (service data adaptation protocol, SDAP) layer in a protocol stack is deployed on the CU; and a radio link control (radio link control, RLC) layer, a media access control (media access control, MAC) layer, and a physical layer (physical layer, PHY) in the protocol stack is deployed on the DU. Therefore, the CU is capable of processing the RRC layer, the PDCP layer, and the SDAP layer, and the DU is capable of processing the RLC layer, the MAC layer, and the PHY layer. It may be understood that the foregoing function division is merely an example, and does not constitute a limitation on the CU and the DU. In addition, a quantity of DUs controlled by the CU is not limited in this application. One CU may control one DU, or may control a plurality of DUs. For example, in FIG. 1A, the CU may be separately in communication connection to two DUs through an F1 interface.

In some scenarios, the CU may be further separated into a CU-CP and a CU-UP. The CU-CP and the CU-UP may be coupled to the DU to jointly complete a function of the base station. In an implementation, an RRC layer and a PDCP layer control plane (PDCP-C) may be deployed on the CU-CP, and an SDAP layer and a PDCP layer user plane (PDCP-U) may be deployed on the CU-UP. For example, protocol layers deployed for the CU-CP and the CU-UP may be shown in FIG. 1B. The CU-UP may be in communication connection to the DU through a user plane interface (F1-U). Optionally, the CU-CP may be in communication connection to the DU through a control plane interface (F1-C), and the CU-CP may be in communication connection to the CU-UP through an E1 interface.

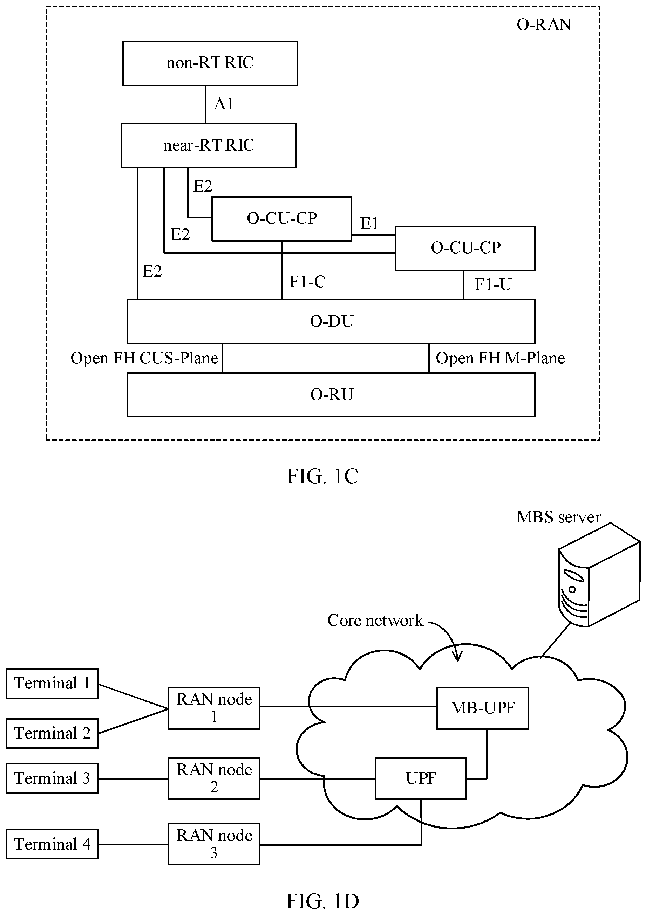

In some scenarios, the RAN node may be applied to an O-RAN system. An O-RAN is intended to implement an intelligent and open access network. An O-RAN architecture mainly features separation of software and hardware, and implements network function virtualization and hardware standardization. In addition, an artificial intelligence (artificial intelligence, AI) module is further introduced into the O-RAN. For example, the AI module includes a RAN intelligent controller (RAN intelligent controller, RIC). For another example, the AI module may include a near-real-time RIC (near-real-time RAN intelligent controller, near-RT RIC) and/or a non-real-time RIC (non-real-time RAN intelligent controller, non-RT RIC). The near-RT RIC may also be referred to as an nRT RIC, and may be used to implement near-real-time intelligent management of the RAN. For example, the near-RT RIC implements near-real-time control and optimization of a module and a resource in the O-RAN through data collection and a related operation on an E2 interface. The non-RT RIC may also be referred to as an NRT RIC, and is used to implement non-real-time intelligent management of the RAN. For example, the non-RT RIC can implement an AI/machine learning (machine learning, ML) workflow including model training and model update, and guide an application/function in the near-RT RIC according to a strategy. In the O-RAN system, the CU may also be referred to as an O-CU (open CU), the DU may also be referred to as an O-DU, the CU-CP may also be referred to as an O-CU-CP, the CU-UP may also be referred to as an O-CU-UP, and the RU may also be referred to as an O-RU. For ease of description, the CU, the CU-CP, the CU-UP, the DU, and the RU are used as examples for description in this application. Any one of the CU (or the CU-CP or the CU-UP), the DU, and the RU in this application may be implemented via a software module, a hardware module, or a combination of a software module and a hardware module. For example, the O-RAN architecture may be shown in FIG. 1C.

It may be understood that, in some scenarios, roles of the RAN node and the terminal are relative to each other. For example, a helicopter or an uncrewed aerial vehicle that is usually configured as a terminal may be alternatively configured as a mobile base station, and a device that accesses a RAN via the helicopter or the uncrewed aerial vehicle is configured as a terminal.

### 3. MBS

The MBS is a service oriented to a plurality of terminals. For example, a RAN node may simultaneously distribute or transmit same content to the plurality of terminals, to improve resource utilization. Common MBS services include a live streaming service, a public security service, a batch software update service, and the like. A transmission path of the MBS service may be: a data server (or referred to as an MBS server)→a core network→the RAN node→the plurality of terminals. When the core network device sends the MBS service to the RAN node, service data is transmitted via an MBS session (session), and the MBS session includes at least one MBS quality of service (quality of service, QoS) flow. When the RAN node sends the MBS service to the terminals, the service data is transmitted via an MBS radio bearer (MBS radio bearer, MRB). For an MRB, the service data may be transmitted in a point-to-multipoint (point-to-multipoint, PTM) or point-to-point (point-to-point, PTP) mode.

For example, as shown in FIG. 1D, the MBS server may send MBS service data to a multicast/broadcast user plane function (multicast/broadcast user plane function, MB-UPF) network element. For example, the MBS server may send the MBS service data to the MB-UPF network element via a multicast/broadcast service transport function (multicast/broadcast service transport function, MBSTF) network element. The MB-UPF network element may be referred to as an anchor of the MBS session. After receiving the MBS service data, the MB-UPF network element may distribute the received MBS service data to the RAN node in the following two modes.
(1) For a RAN node (for example, a RAN node 1 in FIG. 1D) that supports the MBS, the MBS service data is transmitted in a shared transmission mode. For example, the MB-UPF network element sends the MBS service data to the RAN node 1 through a shared transmission channel, and the RAN node 1 sends the MBS service data to a terminal 1 and a terminal 2 via a broadcast service or a multicast service. The shared transmission channel is an MBS session resource set up by the RAN node, that is, a user plane NG interface tunnel of the MBS session. Further, the shared transmission channel is a transmission channel directly set up between the MB-UPF network element and the RAN node. It may be understood that, for the multicast service, a terminal needs to request to join a multicast session (MBS session). When a multicast session join request of a 1^{st} terminal is accepted, an access and mobility management function (access and mobility management function, AMF) network element may trigger the RAN node to set up a multicast session resource context for the multicast session, so as to transmit the MBS service data. For the broadcast service, a multicast/broadcast session management function (multicast/broadcast session management function, MB-SMF) network element may initiate, to the AMF network element, an MBS broadcast session resource setup based on an MBS service area. The AMF network element may initiate an MBS session resource setup request to a RAN node that supports the MBS in the MBS service area, to set up the MBS session resource, so as to transmit the MBS service data. It should be understood that, regardless of the broadcast service or the multicast service, the AMF network element triggers the RAN node to set up the user plane NG interface tunnel for the MBS session.
(2) For a RAN node (for example, a RAN node 2 and a RAN node 3 in FIG. 1D) that does not support the MBS, the MBS service data is transmitted in an individual transmission mode. For example, the MB-UPF network element sends the MBS service data to a user plane function (user plane function, UPF) network element. Then, the UPF network element sends the MBS service data to each RAN node at a user granularity in a unicast mode, for example, sends the MBS service data to the RAN node 2 and the RAN node 3. Subsequently, the RAN node 2 sends the MBS service data to a terminal 3 in a unicast mode, and the RAN node 3 sends the MBS service data to a terminal 4 in a unicast mode.

In this application, from the perspective of an end-to-end management and control procedure, the MBS service can be classified into a multicast service (multicast service) and a broadcast service (broadcast service). Multicast in this application may also be replaced with multicast. The following separately describes the multicast service and the broadcast service.

### 3.1 Multicast service

The multicast service may be used to provide a same service and same specific-content data for a group of terminals. In other words, not all terminals in a multicast service area are authorized to receive multicast service data. The multicast service data may be delivered to the terminals via a multicast session. A terminal in an RRC connected (RRC connected) state may receive the multicast service data, and the multicast service data may be transmitted in a PTP and/or PTM mode. A hybrid automatic repeat request (hybrid automatic repeat request, HARQ) mechanism may also be used in PTP and PTM transmission. The HARQ mechanism may include two modes: One mode is that the terminal feeds back an acknowledgement (acknowledgement, ACK) and a negative acknowledgement (not-acknowledgement, NACK), and the other mode is that the terminal feeds back a NACK but does not feed back an ACK. In addition, a terminal in an RRC inactive (RRC inactive) state may also receive the multicast service data.

In specific application, the RAN node may provide the multicast service for the terminals via the multicast session, and the RAN node may further configure, for the terminals, an MRB corresponding to the multicast session, to transmit the multicast service data. It may be understood that, after the terminal in the RRC connected state joins a multicast session, when a plurality of sessions are activated, the RAN node may provide, for the terminal via an RRC reconfiguration message, a configuration required for receiving the multicast service data. The RAN node may further indicate the terminal to enable or disable the HARQ mechanism. If the terminal is in the RRC inactive state, the RAN node may provide, via an RRC release message, PTM configuration information and multicast service information that continues to be received by the terminal in the RRC inactive state. It may be understood that, when data transmission of the multicast session is suspended, the RAN node may configure the terminal to return to an RRC idle state or the RRC inactive state, and notify the terminal in a group notification mechanism when there is data transmission or the multicast session is activated.

### 3.2 Broadcast service

The broadcast service may be used to provide a same service and same specific-content data to all terminals in a broadcast service area. In other words, all terminals in the broadcast service area are authorized to receive broadcast service data. The broadcast service data may be delivered to the terminals via a broadcast session (broadcast session). Terminals in an RRC idle (RRC idle) state, an RRC inactive state, and an RRC connected state can all receive the broadcast service data. The broadcast service data may be transmitted in a PTM mode, but not in a PTP mode. The broadcast service data does not support a HARQ mechanism either.

In specific application, the RAN node may provide the broadcast service for the terminals via the broadcast session, and the RAN node may further configure, for the terminal, an MRB corresponding to the broadcast session, to transmit the broadcast service data. For the broadcast service, there are two logical channels: an MBS control channel (MBS control channel, MCCH) and an MBS traffic channel (MBS traffic channel, MTCH). The MCCH is used to transmit MTCH configuration information. The MTCH is used to transmit the broadcast service data. If the terminal intends to receive the broadcast service, the terminal may obtain MCCH configuration information via a system message. The configuration information includes a parameter required for receiving the MCCH. Therefore, the terminal may receive the MCCH based on the configuration information, to obtain the MTCH configuration information (for example, MBS broadcast configuration information). The MTCH configuration information includes a parameter required for receiving the MTCH. For example, the MTCH configuration information is the MBS broadcast configuration information, and the MBS broadcast configuration information indicates broadcast service session-related information transmitted on the MTCH. The broadcast service session-related information may include at least one of the following: an MBS session identifier (MBS session ID), group radio network temporary identifier (group RNTI, G-RNTI) scheduling information corresponding to the MBS session identifier, or neighboring cell information of one or more MBS sessions provided on the MTCH. Subsequently, the terminal may receive the broadcast service data on the MTCH.

It may be understood that, in this application, services that can be classified into a multicast service and a broadcast service are collectively referred to as an MBS that is merely used as an example. A name of the MBS is not specifically limited in this application. With evolution of wireless communication technologies, the MBS may have another name.

### 4. Public warning system (public warning system, PWS)

The public warning system is mainly configured to provide various public warning information for terminals, to remind users corresponding to the terminals that the users are about to face or are facing danger (or threats), so that the users can take actions in time to reduce the danger. For example, the PWS may include at least one of the following: an earthquake and tsunami warning system (earthquake and tsunami warning system, ETWS) or a commercial mobile alert system (commercial mobile alert system, CMAS). The ETWS is a public warning system used to meet regulatory requirements for warning notifications related to earthquake and/or tsunamis events. An ETWS warning notification can be a primary notification (short notification) or a secondary notification (which can provide detailed information). The CMAS is a public warning system used to send a plurality of concurrent alert notifications.

In specific application, a RAN node may provide support for the PWS via a system message. For example, the RAN node may schedule and broadcast the alarm information, or the RAN node may page the terminal to indicate that the alarm information is being broadcast. For example, the RAN node may broadcast the alarm information via a system information block (system information block, SIB). For example, the ETWS primary notification may be sent via a SIB 6, the ETWS secondary notification may be sent via a SIB 7, and a CMAS notification may be sent via a SIB 8. It may be understood that the RAN node may further send an ETWS indication and/or a CMAS indication to the terminal through paging, to trigger the terminal to obtain the corresponding alarm information (without delaying to a next modification period). For example, when there is no small data transmission (small data transmission, SDT), a terminal in an RRC idle state and a terminal in an RRC inactive state may detect the ETWS/CMAS indication on respective paging occasions. The terminal in the RRC connected state, or the terminal in the RRC inactive state, when SDT is performed, may detect the ETWS/CMAS indication on any paging occasion. Paging that indicates the ETWS/CMAS notification triggers to obtain system information.

### 5. NTN

In the NTN, all or some functions of a RAN node may be deployed on a non-terrestrial network device like a high-altitude platform or a satellite. Therefore, the NTN may cover a place where a base station cannot be deployed, such as the sea, desert, or air. In addition, these network devices are less susceptible to external force damage and natural disasters, and therefore, system reliability can be improved. The following describes the NTN by using an example of the satellite that is most worthy of research currently.

Satellites can be classified into a high earth orbit satellite, a synchronous earth orbit satellite, and a medium/low earth orbit satellite based on running orbit heights of the satellites. The high earth orbit satellite is also referred to as a stationary satellite. The high earth orbit satellite moves at a same speed as an Earth's rotation system. Therefore, the high earth orbit satellite remains stationary relative to the ground. The synchronous earth orbit satellite also remains stationary relative to the ground. The medium/low earth orbit satellite moves fast relative to the ground. Therefore, a coverage area in which the medium/low earth orbit satellite provides a service also moves as the satellite moves. Therefore, for the medium/low earth orbit satellite, coverage areas in which the medium/low earth orbit satellite provides a service may be classified into two types: a quasi-earth-fixed cell (quasi-earth-fixed cell) and an earth-moving cell (earth-moving cell). The quasi-earth-fixed cell is a cell formed by the medium/low earth orbit satellite by adjusting a beam of the satellite, and a location of the cell on the ground is fixed within a specific time period. The earth-moving cell means that the medium/low earth orbit satellite does not dynamically adjust a beam direction of the satellite. Therefore, the cell covered by a beam of the medium/low earth orbit satellite moves as the satellite moves.

In addition, satellites can be classified into a transparent satellite and a regenerative satellite based on operating modes. The transparent satellite may forward a radio frequency signal of a base station located on the ground. For example, the transparent satellite may implement radio frequency filtering (radio frequency filtering) and frequency conversion and amplification (frequency conversion and amplification), and regenerate a physical layer signal. The regenerative satellite has all or a part of functions of the base station. In other words, all or a part of functions of the base station may be deployed on the satellite. The following describes a network architecture of the NTN by using the transparent satellite and the regenerative satellite as examples separately.

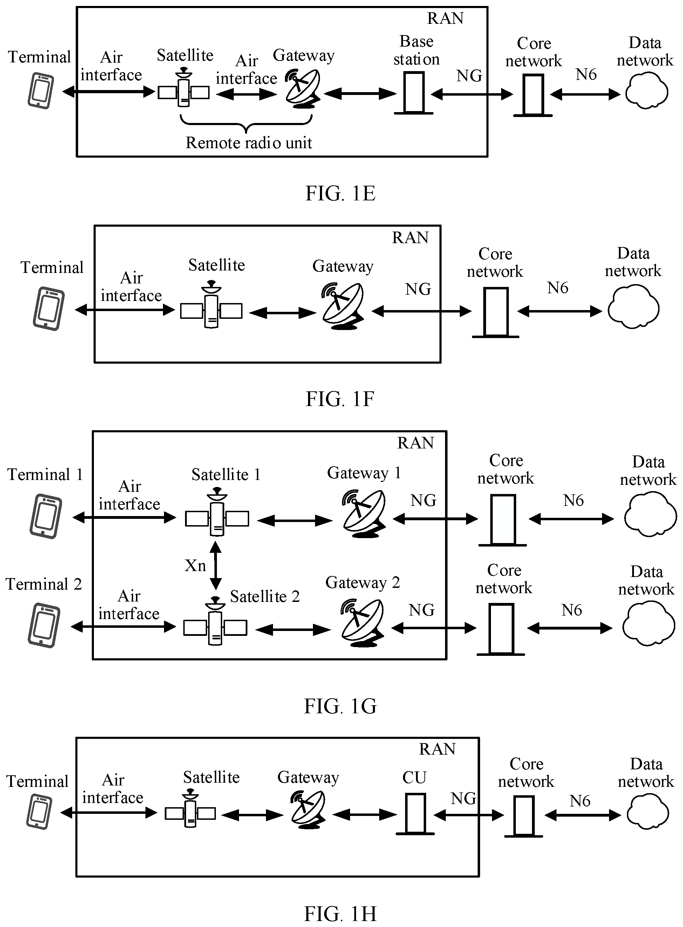

Refer to FIG. 1E. A terminal may communicate with a satellite through an air interface (or a Uu interface). The satellite may communicate with a gateway through an air interface. The gateway may communicate with a base station. The base station may communicate with a core network through an NG interface. The core network may communicate with a data network through an N6 interface. The satellite shown in FIG. 1E is a transparent satellite, and may have functions of radio frequency filtering, frequency conversion and amplification, and the like. For example, the satellite has a function of a layer 1 (layer 1), may regenerate a physical layer signal, and does not have a function of another higher layer.

Refer to FIG. 1F. A terminal may communicate with a satellite through an air interface (or a Uu interface). The satellite may communicate with a gateway through a satellite radio interface (satellite radio interface, SRI). The gateway may communicate with a core network through an NG interface. The core network may communicate with a data network through an N6 interface. The satellite shown in FIG. 1E is a regenerative satellite, and has a processing function of a base station, but the satellite does not have an inter-satellite link (inter-satellite link, ISL).

FIG. 1G shows regenerative satellites with an ISL, for example, a satellite 1 and a satellite 2. In FIG. 1G, the satellite 1 and the satellite 2 have a processing function of a base station, and may communicate with each other through the ISL. In addition, a terminal 1 may communicate with the satellite 1 through an air interface (or a Uu interface). The satellite 1 may communicate with a gateway 1 through an SRI. The gateway 1 may communicate with a core network through an NG interface. Similarly, a terminal 2 may communicate with the satellite 2 through an air interface (or a Uu interface). The satellite 2 may communicate with a gateway 2 through an SRI. The gateway 2 may communicate with a core network through an NG interface. The core network may communicate with a data network through an N6 interface.

Refer to FIG. 1H. A terminal may communicate with a satellite through an air interface (or a Uu interface). The satellite may communicate with a gateway through an SRI. The gateway may communicate with a CU. The CU may communicate with a core network through an NG interface. The core network may communicate with a data network through an N6 interface. The satellite shown in FIG. 1H is a regenerative satellite, and may have a processing function of a DU. In this scenario, the satellite may be considered as the DU.

In conclusion, the NTN can compensate for disadvantages of a TN, and meet requirements of terminals for communication at any time and any place. However, in the NTN, communication between a RAN node and a terminal also encounters a new problem. For example, coverage of the RAN node becomes larger, and terminals are unevenly distributed in a coverage area of the RAN node. Consequently, the RAN node cannot accurately send broadcast or multicast messages that the terminal expects to receive. For another example, in the NTN, the RAN node has mobility. Therefore, a serving cell of the terminal is frequently changed, and a delay in receiving multicast/broadcast service data by the terminal is increased.

To resolve a problem that the RAN node cannot accurately send the broadcast or multicast messages that the terminal expects to receive, this application provides the following two methods.

Method 1: The RAN node obtains information about a first area, and sends first information and second information related to a first service to the terminal. The first information indicates the information about the first area. After receiving the first information, the terminal may determine, based on the information about the first area, whether to process the second information, or determine how to process the second information, or determine a corresponding terminal behavior based on the first information and the second information.

In the foregoing process, the terminal may determine, based on the information about the first area, whether the second information is information that the terminal expects to receive, so as to determine whether to process the second information, or determine a manner of processing the second information, or determine the corresponding terminal behavior based on the first information and the second information.

For example, if the terminal is located in the first area, the terminal may process the second information; or if the terminal is not located in the first area, the terminal does not process the second information. Therefore, according to Method 1, the second information sent by the RAN node is applicable to the terminal in the first area. In other words, after receiving the second information, terminals in different areas may have different behaviors. In this application, the first service may be various services applicable to a communication system. For example, the first service is a public warning system service or a multicast/broadcast service. It may be understood that, when the first service is the public warning system service, the first information may be sent via a system information block 6, a system information block 7, or a system information block 8, and the second information is public warning information, for example, at least one of ETWS information or CMAS information. When the first service is the multicast/broadcast service, the first information is sent via a system information block 20, a system information block 21, a multicast/broadcast service control channel change notification, or a multicast/broadcast service broadcast configuration, and the second information indicates to receive information about the first service or data of the first service.

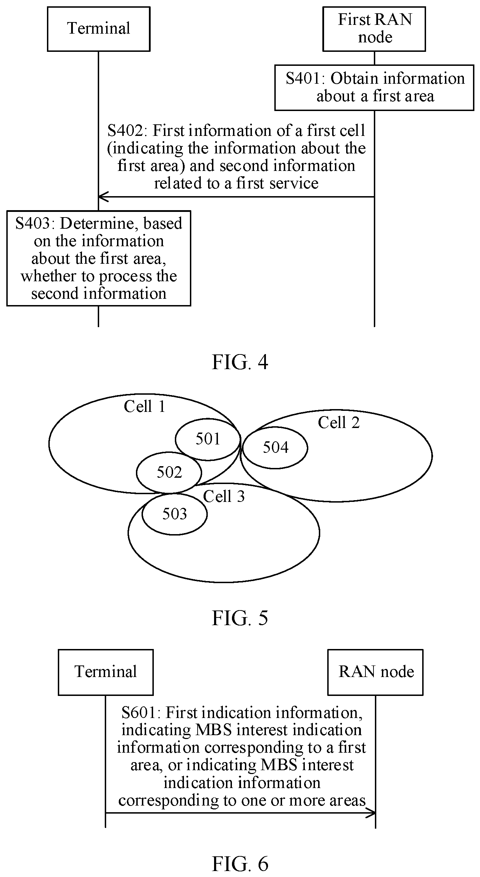

A specific process of Method 1 is described in the following embodiment shown in FIG. 4. Details are not described herein.

Method 2: The terminal sends first indication information to the RAN node. The first indication information indicates multicast/broadcast service interest indication information corresponding to one or more areas. In other words, each area has respective multicast/broadcast service interest indication information. Multicast/broadcast service interest indication information in different areas may be the same or may be different. The one or more areas may include a first area in which the terminal is located. Alternatively, the terminal obtains information about the first area from a system information block 21, and sends the first indication information to the RAN node when entering the first area.

It may be understood that, after receiving the first indication information, the RAN node may send the multicast/broadcast service data to the terminal based on the first indication information. Therefore, according to the foregoing method, the RAN node may send the broadcast/multicast service data in the area based on an MBS service requirement of the terminal in the area, to meet differentiated requirements of the terminal, in different areas, for a multicast/broadcast service, thereby improving user experience and efficiency of the multicast/broadcast service. A specific process of Method 2 is described in the following embodiment shown in FIG. 6. Details are not described herein.

To resolve a problem that the delay in receiving the multicast/broadcast service data by the terminal is large, this application provides the following method 3.

Method 3: When a first area is to be covered, a second RAN node obtains information about a multicast/broadcast service, and sets up or modifies a resource of the multicast/broadcast service. The information about the multicast/broadcast service indicates information about the first area and information about a first session associated with the first area, and the first session is a session of the multicast/broadcast service. It may be understood that the resource of the multicast/broadcast service may be used by the second RAN node to receive multicast/broadcast service session data from a core network. For example, the second RAN node may set up or modify a user plane NG interface tunnel based on the information about the first session (for example, an ID of the first session). The user plane NG interface tunnel is used by the second RAN node to receive first session data from the core network.

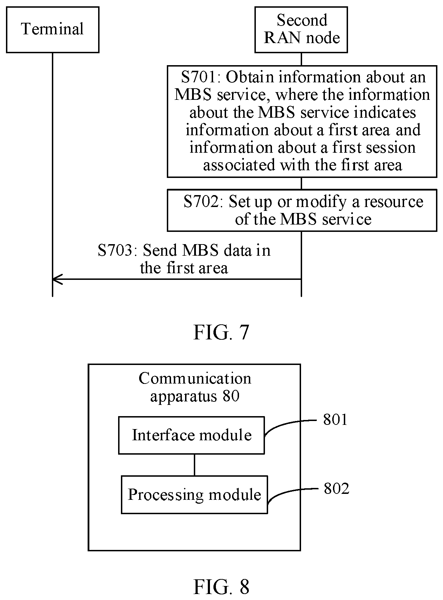

In the foregoing process, the second RAN node may obtain the information about the multicast/broadcast service in advance, and set up or modify the resource of the multicast/broadcast service. Therefore, when covering the first area, the second RAN node can provide the multicast/broadcast service data for the terminal in time, thereby reducing the delay in receiving the data by the terminal, ensuring continuity of the multicast/broadcast service, and improving user experience. A specific process of Method 3 is described in the following embodiment shown in FIG. 7. Details are not described herein.

It should be understood that, although Method 1 to Method 3 are solutions proposed to resolve problems in the NTN, Method 1 to Method 3 are also applicable to the TN. This is not limited.

The following describes in detail implementations of the foregoing methods with reference to the accompanying drawings.

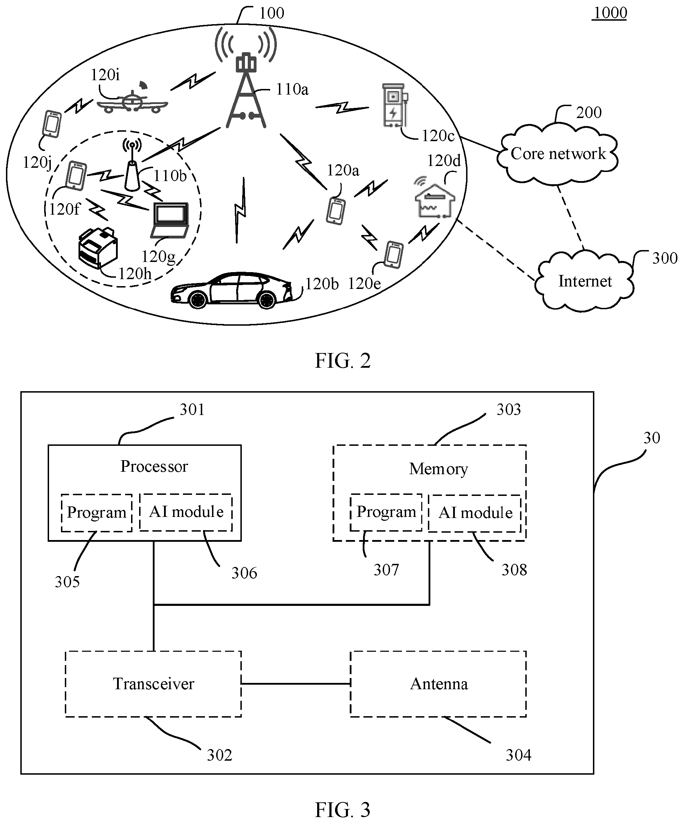

The method provided in this application may be applied to various communication systems. For example, the communication system may be an LTE system, a 5G communication system, a Wi-Fi system, a 3GPP-related communication system, a communication system evolved after 5G (for example, a 6G communication system), or a system integrating a plurality of systems. This is not limited. 5G may also be referred to as NR. The method provided in this application is described below by using a communication system 1000 shown in FIG. 2 as an example. FIG. 2 is merely a diagram, and does not constitute a limitation on an application scenario of the technical solutions provided in this application.

FIG. 2 is a diagram of an architecture of the communication system 1000 according to this application. In FIG. 2, the communication system 1000 includes a RAN 100. The RAN 100 includes at least one RAN node (for example, 110a and 110b in FIG. 2, which are collectively referred to as 110) and at least one terminal (for example, 120a to 120j in FIG. 2, which are collectively referred to as 120). The RAN 100 may further include another RAN node, for example, a wireless relay device and/or a wireless backhaul device (not shown in FIG. 2). The terminal 120 is connected to the RAN node 110 in a wireless manner.

The RAN 100 may be a 3GPP-related cellular system, for example, a 4G or 5G mobile communication system, or a future-oriented evolved system (for example, a 6G mobile communication system). The RAN 100 may alternatively be an open radio access network (open RAN, O-RAN or ORAN), a cloud radio access network (cloud radio access network, CRAN), or a Wi-Fi system. The RAN 100 may alternatively be a communication system that integrates the foregoing two or more systems. The RAN node 110 may also be sometimes referred to as an access network device, a RAN entity, an access node, or the like, and forms a part of the communication system, to help the terminal implement radio access. A plurality of RAN nodes 110 in the communication system 1000 may be nodes of a same type, or may be nodes of different types. For specific descriptions of the RAN node and the terminal, refer to the foregoing descriptions of the RAN node and the terminal. Details are not described herein again.

Optionally, the communication system 1000 further includes a core network 200. The RAN node 110 is connected to the core network 200 in a wireless or wired manner. A core network element in the core network 200 and the RAN node 110 in the RAN 100 may respectively be different physical devices, or may be a same physical device that integrates a logical function of the core network and a logical function of the radio access network. In this application, the core network 200 may provide service support for the terminal. For example, the core network 200 may include an AMF network element. The AMF network element may be responsible for access management and mobility management of the terminal. The core network 200 may further include a session management function (session management function, SMF) network element, a UPF network element, and the like. The SMF network element may be responsible for session management, for example, session setup or session modification. The UPF network element may be responsible for connecting to an external network (for example, a data network). For example, the UPF may forward data of the RAN to the external network, or forward data of the external network to the RAN.

Optionally, the communication system 1000 further includes an internet 300. The internet 300 may send service data to the core network 200 and/or the RAN.

It may be understood that, in some scenarios, the RAN 100 is an NTN, and the RAN node 110 is a transparent satellite or a regenerative satellite. A service coverage area provided by the RAN node 110 may be a quasi-earth-fixed cell, or may be an earth-moving cell.

For example, the communication system 1000 may be applied to any network architecture shown in FIG. 1E to FIG. 1H. FIG. 1E is used as an example. The terminal 120 corresponds to a terminal in FIG. 1E, the RAN node 110 corresponds to a satellite and a base station in FIG. 1E, the core network 200 corresponds to a core network in FIG. 1E, and the internet 300 corresponds to a data network in FIG. 1E. FIG. 1F is used as an example. The terminal 120 corresponds to a terminal in FIG. 1F, the RAN node 110 corresponds to a satellite in FIG. 1F, the core network 200 corresponds to a core network in FIG. 1F, and the internet 300 corresponds to a data network in FIG. 1F. FIG. 1G is used as an example. The terminal 120 corresponds to a terminal 1 in FIG. 1G, the RAN node 110 corresponds to a satellite 1 in FIG. 1G, the core network 200 corresponds to a core network that communicates with the satellite 1 in FIG. 1G, and the internet 300 corresponds to a data network that communicates with the satellite 1 in FIG. 1G. Alternatively, the terminal 120 corresponds to a terminal 2 in FIG. 1G, the RAN node 110 corresponds to a satellite 2 in FIG. 1G, the core network 200 corresponds to a core network that communicates with the satellite 2 in FIG. 1G, and the internet 300 corresponds to a data network that communicates with the satellite 2 in FIG. 1G. FIG. 1H is used as an example. The terminal 120 corresponds to a terminal in FIG. 1H, the RAN node 110 corresponds to a satellite and a CU in FIG. 1H, the core network 200 corresponds to a core network in FIG. 1H, and the internet 300 corresponds to a data network in FIG. 1H.

It may be understood that the communication system 1000 shown in FIG. 2 is merely used as an example, and is not intended to limit the technical solutions of this application. A person skilled in the art should understand that, in a specific implementation process, the communication system 1000 may further include another device, and a quantity of RAN nodes and a quantity of terminals may alternatively be determined based on a specific requirement. This is not limited.

Optionally, each network element or device (for example, the RAN node, the terminal, or the core network element) in FIG. 2 in this application may also be referred to as a communication apparatus, and may be a general-purpose device or a dedicated device. This is not specifically limited in this application.

Optionally, related functions of each network element or device (for example, the RAN node, the terminal, or the core network element) in FIG. 2 in this application may be implemented by one device, or may be jointly implemented by a plurality of devices, or may be implemented by one or more functional modules in one device. This is not specifically limited in this application. It may be understood that the foregoing function may be a network element in a hardware device, or may be a software function running on dedicated hardware, or a combination of hardware and software, or a virtualization function instantiated on a platform (for example, a cloud platform).

In a specific implementation, each network element or device (for example, the RAN node, the terminal, or the core network element) in FIG. 2 in this application may use a composition structure shown in FIG. 3, or include components shown in FIG. 3. FIG. 3 is a diagram of a hardware structure of a communication apparatus to which this application is applicable. It may be understood that the communication apparatus 30 includes means in necessary forms, such as a module, a unit, an element, a circuit, or an interface, to be properly configured together to perform the solutions provided in this application. For example, the communication apparatus 30 includes one or more processors 301, configured to implement the method provided in this application.

The processor 301 may be a general-purpose processor, a dedicated processor, or the like. For example, the processor 301 may be a baseband processor or a central processing unit (central processing unit, CPU). The baseband processor may be configured to process a communication protocol and communication data. The central processing unit may be configured to: control the communication apparatus 30 (for example, a RAN node, a terminal, a core network element, or a chip), execute a software program, and process data of the software program. Optionally, in a design, the processor 301 may include a program 305 (which may also be sometimes referred to as code or instructions). The program 305 may be run on the processor 301, to cause the communication apparatus 30 to perform the method described in the following embodiments. In another possible design, the communication apparatus 30 includes a circuit (not shown in FIG. 3), and the circuit is configured to implement the method described in the following embodiments.

Optionally, the communication apparatus 30 may include one or more memories 303. The memory 303 may be a read-only memory (read-only memory, ROM) or another type of static storage device that can store static information and instructions, a random access memory (random access memory, RAM), a cache (cache) or another type of dynamic storage device that can store information and instructions; or may be an electrically erasable programmable read-only memory (electrically erasable programmable read-only memory, EEPROM), a compact disc read-only memory (compact disc read-only memory, CD-ROM) or another compact disc storage medium, an optical disc storage medium (including a compact disc, a laser disc, an optical disc, a digital versatile disc, a Blu-ray disc, or the like), a magnetic disk storage medium or another magnetic storage device, or any other medium that can be used to carry or store expected program code in a form of an instruction or a data structure and that can be accessed by a computer. However, this is not limited thereto. Usually, the memory provided in this application may be non-volatile. Optionally, the memory 303 stores a program 307 (which may also be sometimes referred to as code or instructions), and the program 307 may be run on the processor 301, to cause the communication apparatus 30 to perform the method described in the following method embodiments.

Optionally, the processor 301 may include an AI module 306, and/or the memory 303 may include an AI module 308. The AI module is configured to implement an AI-related function. The AI module may be implemented by using software, hardware, or a combination of software and hardware. For example, the AI module may include an RIC module. For example, the AI module may be a near-real-time RIC or a non-real-time RIC.

Optionally, the processor 301 and/or the memory 303 may further store data. The processor 301 and the memory 303 may be separately arranged, or may be integrated together.

Optionally, the communication apparatus 30 may further include a transceiver 302 and/or an antenna 304. The processor 301 may also be sometimes referred to as a processing unit, and controls the communication apparatus 30. The transceiver 302 may also be sometimes referred to as a transceiver unit, a transceiver machine, a transceiver circuit, a transceiver, or the like, and is configured to implement a transceiver function of the communication apparatus 30 through the antenna 304.

It may be understood that the composition structure shown in FIG. 3 does not constitute a limitation on the communication apparatus. In addition to the components shown in FIG. 3, the communication apparatus may include more or fewer components than those shown in the figure, or some components may be combined, or different component arrangements may be used.

The following describes the method provided in this application with reference to the accompanying drawings. Network elements in the following embodiments may have the components shown in FIG. 3. Details are not described again.

It may be understood that names of messages between network elements, names of parameters in messages, or the like in the following embodiments of this application are merely examples, and there may alternatively be other names during specific implementation. This is not specifically limited in this application.

It may be understood that "sending information to ... (for example, a terminal)" in this application may be understood as that a destination end of the information is the terminal, and may include directly or indirectly sending the information to the terminal. "Receiving information from ... (for example, the terminal)" may be understood as that a source end of the information is the terminal, and may include directly or indirectly receiving the information from the terminal. Necessary processing, for example, a format change, may be performed on the information when the information is sent between the source end and the destination end, but the destination end can understand valid information from the source end. Similar descriptions in this application may be understood similarly. Details are not described herein again.

It may be understood that, in this application, "/" may represent an "or" relationship between associated objects. For example, A/B may represent A or B. "And/or" may be used to describe three relationships that exist between the associated objects. For example, A and/or B may represent the following three cases: Only A exists, both A and B exist, and only B exists, where A and B may be singular or plural. In addition, a representation similar to "at least one of A, B, and C" or "at least one of A, B, or C" is usually used to represent any one of the following: Only A exists; only B exists; only C exists; both A and B exist; both A and C exist; both B and C exist; and A, B, and C all exist. The foregoing uses three elements A, B, and C as an example to describe an optional item of the project. When there are more elements in the representation, a meaning of the representation may be obtained according to the foregoing rules.

For ease of description of technical solutions of this application, in this application, terms such as "first" and "second" may be used to distinguish between technical features with a same function or similar functions. The terms such as "first" and "second" do not limit a quantity and an execution sequence, and the terms such as "first" and "second" do not limit a definite difference. In this application, a term like "example" or "for example" is used to represent giving an example, an illustration, or a description. Any embodiment or design solution described as "example" or "for example" should not be explained as being more preferred or having more advantages than another embodiment or design solution. Use of the term like "example" or "for example" is intended to present a related concept in a specific manner for ease of understanding.

It may be understood that an "embodiment" mentioned throughout this specification means that particular features, structures, or characteristics related to this embodiment are included in at least one embodiment of this application. Therefore, embodiments in the entire specification are not necessarily a same embodiment. In addition, these particular features, structures, or characteristics may be combined in one or more embodiments in any appropriate manner. It may be understood that sequence numbers of processes do not mean an execution sequence in various embodiments of this application. The execution sequence of the processes should be determined based on functions and internal logic of the processes, and should not be construed as any limitation on implementation processes of this application.

It may be understood that in this application, "when ...", "in a case of ...", "provided that", and "if" all mean that corresponding processing is performed in an objective case, and are not intended to limit time, do not require a determining action during implementation, and do not mean that there is another limitation.

"Simultaneously" in this application may be understood as being at a same time point, may be understood as being in a time period, or may be understood as being in a same periodicity.

It may be understood that in some scenarios, some optional features in this application may be independently implemented without depending on other features, for example, a solution on which the optional features are currently based, to resolve a corresponding technical problem and achieve corresponding effects. Alternatively, in some scenarios, the optional features may be combined with other features based on a requirement. Correspondingly, an apparatus provided in this application may also correspondingly implement these features or functions. Details are not described herein.

It may be understood that, in this application, a same step, or steps or technical features that have a same function may be mutually referenced between different embodiments.

It may be understood that, in this application, a RAN node and/or a terminal and/or an access and mobility management network element may perform some or all of the steps in this application. These steps are merely examples. In this application, other steps or variations of various steps may alternatively be performed. In addition, the steps may be performed in a sequence different from a sequence shown in this application, and not all steps in this application are necessarily performed.

It may be understood that, in the method provided below in this application, the method is illustrated by using an example in which the RAN node, the terminal, and the access and mobility management network element are used as execution bodies of interaction illustration. However, the execution bodies of the interaction illustration are not limited in this application. For example, the RAN node in the method provided in the following embodiments of this application may alternatively be a chip, a chip system, or a processor that supports the RAN node in implementing the method, or may be a logical node, a logical module, or software that can implement all or a part of functions of the RAN node; the terminal in the method provided below in this application may alternatively be a chip, a chip system, or a processor that supports the terminal in implementing the method, or may be a logical node, a logical module, or software that can implement all or a part of functions of the terminal; the access and mobility management network element in the method provided below in this application may alternatively be a chip, a chip system, or a processor that supports the access and mobility management network element in implementing the method, or may be a logical node, a logical module, or software that can implement all or a part of functions of the access and mobility management network element.

FIG. 4 shows a communication method according to this application. According to the communication method, a RAN node can accurately send broadcast or multicast messages that the terminal expects to receive. The method may include the following steps.

S401: A first RAN node obtains information about a first area.

The first RAN node may be any RAN node in the communication system 1000 shown in FIG. 2. The first area includes one or more areas in at least one cell, and the at least one cell includes a first cell.

In a possible design, any area of one or more areas in the first cell is one of geographical areas covered by the first cell. In other words, the first area is one or more of a plurality of geographical areas covered by the cell. To be specific, a cell coverage area (service area) may be divided into a plurality of geographical areas, and the first area is one or more of the plurality of geographical areas. It may be understood that the first area may be a geographical area or a part of several geographical areas. That is, for any geographical area, in addition to the first area, the geographical area may further include another area, for example, a second area, a third area, or a fourth area. In other words, the first area is different from a serving cell, the first area is a geographical area, and the first area may be covered by a plurality of cells, that is, may be an overlapping coverage area of the plurality of cells. The information about the first area may further include information about the plurality of cells corresponding to the first area, for example, an identifier of each cell. Alternatively, the first area is usually a part of a geographical area corresponding to a serving cell. For example, the serving cell is divided into m areas. The first area may be one or more of the m areas. For example, the first area is x areas in the m areas, where x is a positive integer less than or equal to m. Other areas such as a second area, a third area, or a fourth area may be understood similarly.

In another possible design, any area of the one or more areas in the first cell is an area covered by at least one beam of the first cell. In other words, the first area may alternatively be an area covered by at least one beam used by the cell for communication. It may be understood that any one of the at least one beam may indicate one beam set. Beams in this solution may be specifically represented by using identifiers of various signals, for example, a resource index of a channel state information reference signal (channel state information reference signal, CSI-RS), an index of a synchronization signal broadcast channel block (synchronization signal/physical broadcast channel block, which may be briefly referred to as an SS/PBCH block, or may be briefly referred to as an SSB), a resource index of a sounding reference signal (sounding reference signal, SRS), and a resource index of a tracking reference signal (tracking reference signal, TRS). In addition, generally, one beam corresponds to one demodulation reference signal (demodulation reference signal, DMRS) port, one transmission configuration index (transmission configuration index, TCI), one TRP, or one sounding reference signal resource indicator (SRS resource indicator, SRI) (used for uplink data transmission). Therefore, different beams may also be represented by using different DMRS ports, TCIs, TRPs, or SRIs.

It may be understood that, when the first area includes one geographical area, the information about the first area may indicate a geographical range of the first area by indicating coordinate information of the first area or indicating one ground reference point and one radius. Alternatively, the information about the first area may indicate a geographical range of the first area based on coordinates of a ground reference point and a length and a width of the first area. Alternatively, the information about the first area may indicate a geographical range of the first area based on a start time point and an end time point at which the first RAN node serves the first area. Alternatively, the information about the first area may indicate a geographical range of the first area based on a start time point at which the first RAN node serves the first area and a service duration of the service. Optionally, the ground reference point may be a center point of the first area. When the first area includes a plurality of geographical areas, the information about the first area may indicate a geographical range of each of the plurality of areas in any one of the foregoing manners. The information about the first area may further indicate identification information of one or more cells that cover the first area. Identification information of a cell may be at least one of the following: a cell global identifier (cell global identifier, CGI), a physical cell identifier (physical cell identifier, PCI) and a frequency, a physical cell identifier (physical cell identifier, PCI), a cell identity (cell identity, cell ID), a non-public network identifier (non-public network identifier, NPN ID), a non-terrestrial network identifier (non-terrestrial network identifier, NTN ID), or another cell identifier of the cell. The CGI may include a public land mobile network identifier (public land mobile network identifier, PLMN ID) and a cell ID, and may further include a tracking area code.

It may be understood that, when the first area includes an area covered by one or more beams, the information about the first area may indicate identification information of the one or more beams.

It may be understood that the first area may alternatively include at least one cell. In this case, the information about the first area may include information about the at least one cell, for example, an identifier of each cell. Alternatively, the first area may include at least one tracking area. In this case, the information about the first area may include information about the at least one tracking area, for example, an identifier of each tracking area.

It may be understood that the first RAN node may obtain the information about the first area from a core network or a second RAN node. The second RAN node is covering the first area, and the second RAN node may cover a part of the first area or the entire first area. This is not limited.

In a possible implementation, when the first RAN node obtains the information about the first area from the core network or the second RAN node, the first RAN node covers a part of the first area or the entire first area.

In another possible implementation, when the first RAN node is about to cover the first area, the first RAN node may obtain the information about the first area from the core network or the second RAN node. "Is about to cover" or "is to be covered" herein means that the first RAN node covers the first area at a future moment.

In an example, the first RAN node obtains the information about the first area from an access and mobility management network element. The access and mobility management network element may be a network element in the core network 200 in the communication system 1000 shown in FIG. 2. For example, when a first service associated with the first area is triggered, the access and mobility management network element may determine the information about the first area, and send the information about the first area to the first RAN node. Optionally, to cause the first RAN node to process the first service in time, the access and mobility management network element sends the information about the first area to the first RAN node when the first RAN node is about to cover the first area. For example, the first service is a public warning system service or an MBS service. If the first service is the public warning system service, the access and mobility management network element may send the information about the first area to the first RAN node via a read/write-replace warning request (WRITE-REPLACE WARNING REQUEST) message. If the first service is the MBS service, the access and mobility management network element may send the information about the first area to the first RAN node via an MBS session setup/modification request (BROADCAST SESSION SETUP REQUEST or BROADCAST SESSION MODIFICATION REQUEST) message.

In another example, the first RAN node obtains the information about the first area from the second RAN node different from the first RAN node. The second RAN node may be a RAN node that is in the communication system 1000 shown in FIG. 2 and that is different from the first RAN node. For example, the second RAN node may obtain the information about the first area from the access and mobility management network element, and send the information about the first area to the first RAN node. Optionally, to cause the first RAN node to process, in time, the first service associated with the first area, the second RAN node may send the information about the first area to the first RAN node when the second RAN node is about to stop covering the first area and the first RAN node is about to cover the first area. "Is about to stop covering" or "is to stop covering" herein means that the second RAN node stops covering the first area at a future moment, which may mean stopping covering a part of the first area or the entire first area. Optionally, the second RAN node may send the information about the first area to the first RAN node by using non-terminal-related signaling or terminal-related signaling. The non-terminal-related signaling is, for example, an access and mobility indication message (access and mobility indication message), and the terminal-related signaling is, for example, a handover request message.

Optionally, for the foregoing two examples, when the first service is the MBS service, the access and mobility management network element or the second RAN node further sends third information to the first RAN node. The third information is used to request the first RAN node to set up a resource related to the first service, for example, an NG user plane transmission channel related to a session ID of the first service. After receiving the third information, the first RAN node may set up the resource related to the first service, so as to send information about the first service to the terminal. It may be understood that the access and mobility management network element or the second RAN node may send the third information to the first RAN node when the first RAN node is about to cover the first area, so that the first RAN node sets up, in advance, the resource related to the first service, thereby reducing a delay in receiving the information about the first service by the terminal.

It may be understood that, in the foregoing example, if the first RAN node is a satellite, the access and mobility management network element or the second RAN node may determine, based on a movement trajectory of the first RAN node, that the first RAN node is about to cover the first area.

It may be understood that the foregoing "is about to cover the first area" may be understood as starting to cover the first area at a future moment, or covering a part of the first area or the entire first area at a future moment. The foregoing "is about to cover the first area" may be replaced with "serves the first area at a future moment", "provides a service for the first area at a future moment", or the like. The same applies to "is about to stop covering the first area".

S402: The first RAN node sends first information of the first cell and second information related to the first service to the terminal, and correspondingly, the terminal receives the first information and the second information from the first RAN node.

In a possible implementation, when the first RAN node starts to cover the first area or has covered the first area, the first RAN node sends the first information and the second information to the terminal.

The terminal may be a terminal that is in the communication system 1000 shown in FIG. 2 and that is in communication connection to the first RAN node. The first information indicates the information about the first area. For example, the first information directly includes the information about the first area, or the first RAN node may perform corresponding processing on the information about the first area, for example, format conversion, information addition, or information reduction, to obtain the first information. The first information is used by the terminal to determine whether to process the second information or how to process the second information. When the first service is the public warning service, the second information is public warning information. When the first service is the MBS service, the second information indicates to receive the information about the first service or data of the first service. For example, when the first service is the MBS service, the information about the first service is information sent by a server of the first service to a terminal that subscribes to the first service. When the first service is the public warning service, the information about the first service is the second information, and the first information indicates how to process the second information.

It may be understood that the first information and the second information may be sent via a same message, or may be sent via different messages. If the first information and the second information are sent via different messages, the first RAN node may first send the first information and then send the second information, or first send the second information and then send the first information, or simultaneously send the first information and the second information. This is not limited. It may be understood that, if the first information and the second information are sent via different messages, the first information and the second information include information such as an identifier of the first service, so that the first information is associated with the second information. For ease of description, the following embodiments of this application are described by using an example in which the first information and the second information are sent via a same message.

In an example, the first service is the public warning system service, and the first information and the second information are sent via a system information block 6, a system information block 7, or a system information block 8. For example, if the first service is an ETWS service, and the second information includes an ETWS primary notification, the first information and the second information are sent via the system information block 6; if the first service is an ETWS service, and the second information includes an ETWS secondary notification, the first information and the second information are sent via the system information block 7; or if the first service is a CMAS service, and the second information includes a CMAS notification, the first information and the second information are sent via the system information block 8.

In another example, the first service is the MBS service, and the first information and the second information are sent via a system information block 20, a system information block 21, an MCCH change notification, or MBS broadcast configuration information.

S403: The terminal determines, based on the information about the first area, whether to process the second information.

In a possible implementation, the terminal measures a location of the terminal, and determines, based on the location of the terminal and the information about the first area, whether the terminal is located in the first area, so as to determine whether to process the second information or how to process the second information. It may be understood that, for different services, the second information includes different content, and the terminal processes the second information in different manners. For a same service, because messages sending the first information are different, the terminal processes the second information in different manners. The following provides detailed descriptions.

Case 1: The first service is the public warning system service, and the second information is the public warning information.

In a possible implementation, if the terminal is located in the first area, the terminal processes the second information; or if the terminal is not located in the first area, the terminal does not process or discards the second information. The processing includes at least one of receiving, continuing to receive, storing, assembling, or forwarding to a higher layer.

It may be understood that, in Case 1, the first area includes an area corresponding to an alarm event indicated by the public warning information, for example, an area in which the alarm event is to occur or has occurred. For example, the first service is the ETWS service. The first area includes an area in which an earthquake and/or tsunami event is to occur or has occurred. When the terminal is located in the first area, the terminal may process the second information. The processing may include storing the second information, continuing to receive the second information, assembling the second information, and forwarding the second information to a higher layer (or an upper layer, for example, an application layer), so as to trigger the terminal to remind a user corresponding to the terminal that the user is facing or about to face danger. The second information may indicate one identifier to the terminal, so that the terminal can associate second information received a plurality of times with one alarm message. When the terminal is not located in the first area, the terminal discards the second information. For example, if the first information and the second information are sent via the system information block 6, and the second information includes the ETWS primary notification, the terminal discards the ETWS primary notification or discards the system information block 6; if the first information and the second information are sent via the system information block 7, and the second information includes the ETWS secondary notification, the terminal discards the ETWS secondary notification or discards the system information block 7; or if the first information and the second information are sent via the system information block 8, and the second information includes the CMAS notification, the terminal discards the CMAS notification or discards the system information block 8.

It may be understood that the system information block 6, the system information block 7, or the system information block 8 is not necessarily received by the terminal from a same cell. For example, after receiving the system information block 6 in the first cell, the terminal moves to a second cell. The terminal may continue to receive the system information block 6 in the second cell, and store, continue to receive, assemble, or forward the second information to a higher layer. The second information may be the system information block 6 or second information included in the system information block 6. For example, the system information block 6 in the first cell and the system information block 6 in the second cell both indicate the first area, or the terminal is located in an area indicated by the system information block 6 in the first cell and the system information block 6 in the second cell. When the terminal is located in the first cell, the terminal may receive and store the second information. After moving to the second cell, the terminal may continue to receive the second information, assemble the second information received each time, and forward (forward) the second information to a higher layer (for example, the application layer).

It may be understood that, in Case 1, the first RAN node may flexibly make an application scope of the announcement alarm information effective by sending the information about the first area to the terminal. Therefore, according to the foregoing solution, the terminal located in the first area can process the announcement alarm information, to avoid a threat to personal and property security of a user, and the terminal not located in the first area does not process the public warning information, to avoid occurrence of a false alarm and impact on user experience.

Case 2: The first service is the MBS service, and the second information is MCCH configuration information. The first information and the second information are sent via the system information block 20.

In a possible implementation, if the terminal is located in the first area, the terminal processes the second information; or if the terminal is not located in the first area, the terminal does not process the second information. Optionally, the terminal is interested in the MBS service. For example, the terminal is interested in one or more MBS sessions, and the MBS session is identified by an MBS session identifier.

It may be understood that, in Case 2, the first area includes an applicable area of the MBS service, or an area associated with the MBS session. When the terminal is located in the first area, the terminal may receive the MBS broadcast configuration information based on the second information. Subsequently, the terminal may receive broadcast service data on an MTCH based on the MBS broadcast configuration information (or MTCH configuration information). When the terminal is not located in the first area, the terminal does not receive information from an MCCH, in other words, the terminal does not receive the MBS broadcast configuration information. Therefore, according to the foregoing method, the first RAN node may flexibly make an application scope of the MBS service effective by sending the information about the first area to the terminal. Specifically, because a terminal located in the first area can receive the broadcast service data, the terminal can receive the MBS broadcast configuration information based on the MCCH configuration information, and then receive the broadcast service data. Terminals that are not located in the first area cannot receive the broadcast service data, and therefore, these terminals do not need to receive the MBS broadcast configuration information based on the MCCH configuration information.

Optionally, the MBS broadcast configuration information may include information about a second area corresponding to the MBS session. Descriptions of the second area are similar to those of the first area, and content included in the information about the second area is similar to content included in the information about the first area. For details, refer to the foregoing corresponding descriptions. Details are not described herein again. The second area is an area associated with the MBS session supported by a serving cell and/or a neighboring cell, and the MBS session may be one or more MBS sessions. It may be understood that, if a second area of a cell reselected by the terminal does not include the first area, the terminal enters a connected state and requests to receive data in a unicast mode. For example, the terminal enters an RRC connected state and requests to receive, in a unicast mode, service data of the MBS service associated with the first area, so as to avoid failure in receiving the service data by the terminal after the terminal camps on the reselected cell. It may be understood that, for the foregoing possible implementation, the first information may alternatively be included in the MBS broadcast configuration information. Optionally, in this case, the system information block 20 may not include the first information.

For example, the first cell is a cell 1 in FIG. 5, the first area includes an area 502 and an area 503, and the second area includes an area 501 and an area 504. If the terminal reselects a cell 2, before moving to the cell 2, the terminal enters a connected state and requests to receive information in a unicast mode.

Case 3: The first service is the MBS service, and the second information indicates MBS frequency information. The MBS frequency information may be understood as one or more pieces of frequency information that supports an MBS service, or one or more pieces of frequency information that provides MBS broadcast service data. The first information indicates a third area corresponding to an MBS frequency, that is, transmission of MBS data on the MBS frequency is supported in the third area. That transmission of the MBS data on the MBS frequency is supported in the third area may be understood as that each MBS frequency has a corresponding third area, or may be understood as that a plurality of MBS frequencies have a common third area. In other words, areas corresponding to different MBS frequencies may be the same or different. The first information and the second information are sent via the system information block 21.

In a possible implementation, if the terminal is located in the first area, the terminal processes the second information; or if the terminal is not located in the first area, the terminal does not process the second information. Optionally, the terminal is interested in the MBS service.

It may be understood that, in Case 3, the first area includes an area supporting a frequency of the MBS service. When the terminal is located in the first area, and during cell reselection, if the third area corresponding to the MBS frequency includes the first area, the terminal sets the MBS frequency as a highest priority. In other words, during cell reselection, the terminal considers a priority of an MBS frequency that supports the first area, so that the terminal reselects a cell that supports the MBS service, thereby ensuring continuity of the MBS service. When the terminal is located in the first area, if the third area corresponding to the MBS frequency does not include the first area, the terminal does not set the MBS frequency as a highest priority, or does not adjust a priority of the MBS frequency, or sets a priority of the MBS frequency to a lowest priority. In other words, during cell reselection, the terminal does not consider a priority of an MBS frequency that does not support the first area.

It may be understood that the system information block 21 may further include information about an area other than the first area and frequency information of an MBS service supported in the area. This is not limited.

Case 4: The first service is the MBS service, and the second information indicates that a change in MCCH configuration information, and/or a change in an area for receiving MCCH configuration information. The first information and the second information are sent via the MCCH change notification, and the MCCH change notification may be sent to the terminal via downlink control information (downlink control information, DCI). Optionally, the MCCH change notification is further used to notify at least one of the following: starting of an MBS session, modification of an MBS session, stopping of an MBS session, or modification of neighboring cell information.

In a possible implementation, if the terminal is located in the first area, the terminal processes the second information; or if the terminal is not located in the first area, the terminal does not process the second information. Optionally, the terminal is interested in the MBS service.

It may be understood that, in Case 4, the first information indicates an area corresponding to the MCCH change notification. For example, if the second information indicates that a change in the MCCH configuration information, the first area indicates an area in which the MCCH configuration information needs to be re-received. When the terminal is located in the first area, the terminal receives updated MCCH configuration information, so that the terminal receives the MBS broadcast configuration information based on the updated MCCH configuration information, and receives broadcast service data based on the MBS broadcast configuration information. If the second information indicates that a change in an area corresponding to the MCCH configuration information, the terminal associates the previously obtained MCCH configuration information with the first area, to determine whether the MCCH configuration needs to be re-received. If the second information indicates at least one of other information: starting of an MBS session, modification of an MBS session, stopping of an MBS session, or modification of neighboring cell information, the terminal re-receives the MCCH configuration information, and re-receives the MBS broadcast configuration information based on the newly received MCCH configuration information.

It may be understood that when the terminal is not located in the first area, the terminal does not obtain the updated MCCH configuration information.

It may be understood that, for Case 2 to Case 4, if the terminal leaves the first area, the terminal stops receiving the information about the first service.

It may be understood that the actions of the first RAN node, the terminal, the second RAN node, or the access and mobility management network element in the foregoing steps may be performed by the processor 301 in the communication apparatus 30 shown in FIG. 3 by invoking the application program code stored in the memory 303. This is not limited in this application.

Based on the method shown in FIG. 4, the terminal may determine, based on the information about the first area, whether the second information is information that the terminal expects to receive, to determine whether to process the second information. For example, if the terminal is located in the first area, the terminal may process the second information; or if the terminal is not located in the first area, the terminal does not process the second information. Therefore, according to the method shown in FIG. 4, the second information sent by the first RAN node is applicable to the terminal in the first area, so that the terminal in the first area receives a message that the terminal expects to receive.

In addition to the method shown in FIG. 4, this application further provides a communication method, to resolve a problem that a RAN node cannot accurately send broadcast or multicast messages that the terminal expects to receive.

FIG. 6 shows another communication method according to this application. The communication method may include the following steps.

S601: A terminal sends first indication information to a RAN node, and correspondingly, the RAN node receives the first indication information from the terminal.

The terminal may be any terminal in the communication system 1000 shown in FIG. 2. The first indication information indicates MBS interest indication information corresponding to a first area. Certainly, the first indication information may alternatively indicate MBS interest indication information corresponding to one or more areas. It may be understood that each area has respective MBS interest indication information, and MBS interest indication information corresponding to different areas may be the same or may be different. The MBS interest indication information includes at least one of the following: an identifier of an MBS service, information about a priority of broadcast compared with that of unicast/multicast, or related information about receiving an MBS broadcast by a non-serving cell. The related information about receiving the MBS broadcast by the non-serving cell may indicate at least one of the following: a frequency, a frequency band, a carrier spacing, or channel frequency response (channel frequency response, CFR) information used by the non-serving cell for receiving the MBS broadcast. The CFR information may indicate one or more of a CFR bandwidth, a start location of a physical resource block (physical resource block, PRB) occupied by a CFR, or a quantity of PRBs occupied by a CFR.

In a possible implementation, the terminal determines the first area or one or more areas. For example, the terminal may determine a range of the first area or a range of the one or more areas based on a location of the terminal, a movement trajectory of the terminal, and an MBS service requirement. The terminal may further indicate the area to a network side. It may be understood that a meaning of the first area is similar to that of any one of the one or more areas. In this application, the first area is used as an example for description.

In a possible design, the first area includes at least one cell or tracking area. In other words, the terminal may report, at a granularity of a cell or a tracking area, an MBS service that the terminal is interested in. Alternatively, the first area includes one or more areas in at least one cell. For example, the at least one cell includes a first cell. Any area of one or more areas in the first cell is an area covered by a beam of the first cell, or is a geographical area covered by the first cell. For other descriptions of the first area, refer to the descriptions in the method in FIG. 4. Details are not described herein again.

Optionally, before S601, the RAN node sends second indication information to the terminal, and correspondingly, the terminal receives the second indication information from the RAN node. The RAN node may be a RAN node that is in the communication system 1000 shown in FIG. 2 and that is in communication connection to the terminal. The second indication information indicates information about the first area. Optionally, the second indication information is sent via a system information block 21. When the terminal enters the first area, the terminal sends the MBS interest indication information. Further, if the terminal further receives a system information block 20 of a primary cell or a secondary cell, when entering the first area, the terminal indicates, in MBS service indication information, a list of MBS services that the terminal is interested in. The system information block 20 of the secondary cell is indicated to the terminal by using dedicated signaling.

In a possible design, if the first area includes at least one cell, the information about the first area includes an identifier of each of the at least one cell. If the first area includes at least one tracking area, the information about the first area includes an identifier of each of the at least one tracking area. If the first area includes one or more geographical areas in at least one cell/an area covered by one or more beams in at least one cell, specific content included in the information about the first area is similar to the content included in the information about the first area in the embodiment shown in FIG. 4. For details, refer to corresponding descriptions in the embodiment shown in FIG. 4. Details are not described again.

It may be understood that the actions of the RAN node or the terminal may be performed by the processor 301 in the communication apparatus 30 shown in FIG. 3 by invoking the application program code stored in the memory 303. This is not limited in this application.

Based on the method shown in FIG. 6, the terminal may report, to the RAN node, an MBS service that the terminal in the first area is interested in, so that the RAN node sends, to the terminal based on an indication of the terminal, MBS service data that the terminal is interested in, and indicates, to the terminal, a manner of sending the MBS service data. Therefore, the method shown in FIG. 6 can meet differentiated requirements of the terminal, in different areas, for the MBS service, thereby improving user experience and efficiency of the MBS service.

In addition to the foregoing method, this application further provides a communication method, to reduce a delay in receiving MBS service data by a terminal.

FIG. 7 shows a communication method according to this application. The communication method may include the following steps.

S701: A second RAN node obtains information about an MBS service.

The second RAN node may be any RAN node in the communication system 1000 shown in FIG. 2. The information about the MBS service may indicate information about a first area and information about a first session associated with the first area. The first session is a session of the MBS service. The information about the MBS service may be used to set up/modify a resource of the MBS service, for example, set up/modify an MBS session resource. Subsequently, the second RAN node may receive MBS data from a core network via the MBS session resource, and send the MBS data to a terminal.

In a possible design, the information about the first session includes an identifier of the first session.

In a possible design, the first area includes at least one cell or tracking area. Alternatively, the first area includes one or more areas in at least one cell. For example, the at least one cell includes a first cell. Any area of one or more areas in the first cell is an area covered by a beam of the first cell, or a geographical area covered by the first cell. For other descriptions of the first area, refer to corresponding descriptions in the embodiment shown in FIG. 4.

It may be understood that, if the first area includes at least one cell, the information about the first area includes an identifier of each of the at least one cell. If the first area includes at least one tracking area, the information about the first area includes an identifier of each of the at least one tracking area. If the first area includes one or more areas in at least one cell, specific content included in the information about the first area is similar to the content included in the information about the first area in the embodiment shown in FIG. 4. For details, refer to corresponding descriptions in the embodiment shown in FIG. 4. Details are not described again.

In a possible implementation, when the second RAN node is about to cover the first area, the second RAN node obtains the information about the MBS service. Specifically, the second RAN node may obtain the information about the MBS service from a core network or a RAN node other than the second RAN node.

In an example, the second RAN node obtains the information about the MBS service from an access and mobility management network element. The access and mobility management network element may be a network element in the core network 200 in the communication system 1000 shown in FIG. 2. For example, when the MBS service is triggered, the access and mobility management network element may determine the first area associated with the first session, and send the information about the MBS service to the second RAN node when the second RAN node is about to cover the first area. Optionally, the information about the MBS service is sent via an MBS session setup/modification request message. It may be understood that if the second RAN node has not set up an MBS session, the information about the MBS service is sent via the MBS session setup request message; or if the second RAN node has set up an MBS session, the information about the MBS service may alternatively be sent via the MBS session modification request message.

In another example, the second RAN node obtains the information about the MBS service from a first RAN node different from the second RAN node. The first RAN node may be a RAN node that is in the communication system 1000 shown in FIG. 2 and that is different from the second RAN node. For example, the first RAN node may obtain the information about the MBS service from the access and mobility management network element, and send the information about the MBS service to the second RAN node when the second RAN node is about to cover the first area. Optionally, the first RAN node may send the information about the first area to the second RAN node by using non-terminal-related signaling or terminal-related signaling. The non-terminal-related signaling is, for example, an access and mobility indication message, and the terminal-related signaling is, for example, a handover request message.

It may be understood that, in the foregoing example, if the second RAN node is a satellite, the access and mobility management network element or the first RAN node may determine, based on a movement trajectory of the second RAN node, that the second RAN node is about to cover the first area.

It may be understood that the foregoing "is about to cover the first area" may be understood as starting to cover the first area at a future moment, or covering a part of the first area or the entire first area at a future moment. The foregoing "is about to cover the first area" may be replaced with "serves the first area at a future moment", "provides a service for the first area at a future moment", or the like.

S702: The second RAN node sets up or modifies the resource of the MBS service.

It may be understood that if the second node has set up an MBS session, the second node may modify the resource of the MBS service, for example, modify the MBS session resource; or if the second RAN node has not set up an MBS session, the second node sets up the resource of the MBS service, for example, sets up the MBS session resource. In this way, the second RAN node may receive the MBS data from the core network via the MBS session.

Optionally, if the information about the MBS service is obtained by the second RAN node from the access and mobility management network element, and the second RAN node agrees to the request, the second RAN node may send an MBS session setup/modification response to the access and mobility management network element.

Optionally, if the information about the MBS service is obtained by the second RAN node from the first RAN node, the second RAN node may send request information of the first session to a core network element, for example, the access and mobility management network element, to trigger setup/modification of the resource of the MBS service. After receiving the request information of the first session, the access and mobility management network element may agree to set up/modify the resource of the MBS service. For example, the core network agrees to send data of the first session to the second RAN node. Optionally, the request information of the first session is sent via the MBS session setup/modification request message, for example, via a BROADCAST SESSION SETUP REQUIRED message or a BROADCAST SESSION MODIFICATION REQUIRED message.

Optionally, if the access and mobility management network element agrees to the request, the access and mobility management network element may send an MBS session setup/modification response to the second RAN node.

S703: The second RAN node sends the MBS data to the terminal in the first area, and correspondingly, the terminal in the first area receives the MBS data from the second RAN node.

It may be understood that the actions of the second RAN node, the terminal, the first RAN node, or the access and mobility management network element in the foregoing steps may be performed by the processor 301 in the communication apparatus 30 shown in FIG. 3 by invoking the application program code stored in the memory 303. This is not limited in this application.

Based on the method shown in FIG. 7, the second RAN node may obtain the information about the MBS service in advance, and set up or modify the resource of the MBS service. Therefore, when covering the first area, the second RAN node can provide multicast/broadcast service data for the terminal in time, thereby reducing a delay in receiving the data by the terminal, ensuring continuity of the multicast/broadcast service, and improving user experience.

Embodiments mentioned above in this application may be combined when the solutions are not contradictory. This is not limited.

The foregoing mainly describes the solutions provided in this application from the perspective of interaction between network elements. Correspondingly, this application further provides a communication apparatus. The communication apparatus may be the terminal in the foregoing method embodiments, or an apparatus including the foregoing terminal, or a component that can be used in the terminal. Alternatively, the communication apparatus may be the RAN node (for example, the first RAN node or the second RAN node in the embodiment shown in FIG. 4, the RAN node in the embodiment shown in FIG. 6, or the first RAN node or the second RAN node in the embodiment shown in FIG. 7) in the foregoing method embodiments, or an apparatus including the foregoing RAN node, or a component that can be used in the RAN node. Alternatively, the communication apparatus may be the access and mobility management network element in the foregoing method embodiments, or an apparatus including the foregoing access and mobility management network element, or a component that can be used in the access and mobility management network element. It may be understood that, to implement the foregoing functions, the terminal, the RAN node, the access and mobility management network element, or the like includes corresponding hardware structures and/or software modules for performing the functions. A person skilled in the art should be easily aware that, in combination with units and algorithm operations of the examples described in embodiments disclosed in this specification, this application can be implemented by hardware or a combination of hardware and computer software. Whether a function is performed by hardware or hardware driven by computer software depends on particular applications and design constraint conditions of the technical solutions. A person skilled in the art may use different methods to implement the described functions for each particular application, but it should not be considered that the implementation goes beyond the scope of this application.

In this application, the terminal, the RAN node, or the access and mobility management network element may be divided into functional modules based on the foregoing method examples. For example, each functional module may be obtained through division based on each corresponding function, or two or more functions may be integrated into one processing module. The integrated module may be implemented in a form of hardware, or may be implemented in a form of a software functional module. It may be understood that division into the modules in this application is an example, and is merely logical function division. In actual implementation, another division manner may be used.

For example, when functional modules are obtained through division in an integrated manner, FIG. 8 is a diagram of a structure of a communication apparatus 80. The communication apparatus 80 includes an interface module 801 and a processing module 802. The interface module 801 may also be referred to as an interface unit, and is configured to perform receiving and sending operations. For example, the interface module may be an interface circuit, a transceiver machine, a transceiver, or a communication interface. The processing module 802 may also be referred to as a processing unit, and is configured to perform an operation other than the receiving and sending operations. For example, the processing module may be a processing circuit or a processor.

In some embodiments, the communication apparatus 80 may further include a storage module (not shown in FIG. 8), configured to store program instructions and data.

In some embodiments, the communication apparatus 80 may further include an AI module (not shown in FIG. 8), configured to implement an AI-related function. The AI module may implement an AI function by using software, hardware, or a combination of software and hardware. For example, the AI module includes an RIC module. Optionally, the AI module and the storage module are integrated into one module, or the AI module and the processing module 802 are integrated into one module.

For example, the communication apparatus 80 is configured to implement a function of a terminal. The communication apparatus 80 is, for example, the terminal in the embodiment shown in FIG. 4.

The interface module 801 is configured to receive first information from a first cell. The first information indicates information about a first area. For example, the interface module 801 may be configured to perform S402.

The processing module 802 is configured to determine, based on the information about the first area, whether to process second information related to a first service. The first service is a public warning system service, and the second information is public warning information; or the first service is a multicast/broadcast service, and the second information indicates to receive information about the first service. For example, the processing module 802 may be configured to perform S403.

In a possible implementation, the first area includes one or more areas in at least one cell, and the at least one cell includes the first cell.

In a possible implementation, any area of the one or more areas in the first cell is an area covered by a beam of the first cell, or is a geographical area covered by the first cell.

In a possible implementation, the first service is a public warning system service, and the processing module 802 is specifically configured to: if a terminal is located in the first area, process the second information, where the processing includes at least one of receiving, storing, assembling, or forwarding to a higher layer; or the processing module 802 is specifically configured to: if a terminal is not located in the first area, discard the second information.

In a possible implementation, the first service is the public warning system service, and the first information and the second information are sent via a system information block 6, a system information block 7, or a system information block 8.

In a possible implementation, the first service is the multicast/broadcast service, and the first information and the second information are sent via a system information block 20, a system information block 21, or a multicast/broadcast service control channel change notification.

In a possible implementation, the first information and the second information are sent via the system information block 20, and the second information is multicast/broadcast service control channel configuration information; and the processing module 802 is specifically configured to: if a terminal is located in the first area, process the second information. The processing the second information includes: receiving multicast/broadcast service broadcast configuration information based on the second information.

In a possible implementation, the multicast/broadcast service broadcast configuration information includes information about a second area, where the second area is an area associated with a multicast/broadcast service session supported by a serving cell and/or a neighboring cell; and the processing module 802 is further configured to: if a second area of a reselected cell does not include the first area, enter a connected state and request to receive data in a unicast mode.

In a possible implementation, the first information and the second information are sent via the system information block 21, and the second information indicates a frequency of a multicast/broadcast service supported by the first area; and the processing module 802 is specifically configured to: if a terminal is located in the first area, process the second information. The processing the second information includes: setting the frequency of the multicast/broadcast service supported by the first area as a highest priority during cell reselection.

In a possible implementation, the first information and the second information are sent via the multicast/broadcast service control channel change notification, and the second information indicates that a change in multicast/broadcast service control channel configuration information, and/or indicates a change in an area for receiving multicast/broadcast service control channel configuration information; and the processing module 802 is specifically configured to: if a terminal is located in the first area, process the second information. The processing the second information includes: receiving updated multicast/broadcast service control channel configuration information.

In a possible implementation, the processing module 802 is further configured to: if the terminal leaves the first area, stop receiving the information about the first service.

When the communication apparatus 80 is configured to implement the function of the terminal, for other functions that can be implemented by the communication apparatus 80, refer to related descriptions of the embodiment shown in FIG. 4. Details are not described again.

Alternatively, for example, the communication apparatus 80 is configured to implement a function of a first RAN node. The communication apparatus 80 is, for example, the first RAN node in the embodiment shown in FIG. 4.

The processing module 802 is configured to obtain information about a first area. For example, the processing module 802 may be configured to perform S401.

The interface module 801 is configured to send first information of a first cell and second information related to a first service to a terminal. The first information indicates the information about the first area, and the first information is used by the terminal to determine whether to process the second information. The first service is a public warning system service, and the second information is public warning information; or the first service is a multicast/broadcast service, and the second information indicates to receive information about the first service. For example, the interface module 801 may be configured to perform S402.

In a possible implementation, the first area includes one or more areas in at least one cell, and the at least one cell includes the first cell.

In a possible implementation, any area of the one or more areas in the first cell is an area covered by a beam of the first cell, or is a geographical area covered by the first cell.

In a possible implementation, the processing module 802 is specifically configured to receive the information about the first area from a core network element via the interface module 801; or the processing module 802 is specifically configured to receive the information about the first area from a second radio access network node via the interface module 801.

In a possible implementation, the first service is the multicast/broadcast service, and the interface module 801 is further configured to send multicast/broadcast service broadcast configuration information to the terminal, where the multicast/broadcast service broadcast configuration information includes information about a second area, and the second area is an area associated with a multicast/broadcast service session supported by a serving cell and/or a neighboring cell.

In a possible implementation, the first service is the multicast/broadcast service, and the first information and the second information are sent via a system information block 20, a system information block 21, or a multicast/broadcast service control channel change notification.

In a possible implementation, the first service is the public warning service, and the first information and the second information are sent via a system information block 6, a system information block 7, or a system information block 8.

When the communication apparatus 80 is configured to implement the function of the first RAN node, for other functions that can be implemented by the communication apparatus 80, refer to related descriptions of the embodiment shown in FIG. 4. Details are not described again.

Alternatively, for example, the communication apparatus 80 is configured to implement a function of a second RAN node/an access and mobility management network element. The communication apparatus 80 is, for example, the second RAN node/access and mobility management network element in the embodiment shown in FIG. 4.

The processing module 802 is configured to determine information about a first area. The information about the first area is used by the terminal to determine whether to process second information related to a first service, where the first service is a public warning system service, and the second information is public warning information; or the first service is a multicast/broadcast service, and the second information indicates to receive information about the first service.

The interface module 801 is configured to send the information about the first area to a first radio access network node.

In a possible implementation, the first area includes one or more areas in at least one cell, and the at least one cell includes the first cell.

In a possible implementation, any area of the one or more areas in the first cell is an area covered by a beam of the first cell, or is a geographical area covered by the first cell.

In a possible implementation, the interface module 801 is further configured to: when the first radio access network node is about to cover the first area, send third information to the first radio access network node, where the third information is used to request the first radio access network node to set up a resource related to the first service.

In a possible implementation, the interface module 801 is specifically configured to: when the first radio access network node is about to cover the first area, send the information about the first area to the first radio access network node.

When the communication apparatus 80 is configured to implement the function of the second RAN node/access and mobility management network element, for other functions that can be implemented by the communication apparatus 80, refer to related descriptions of the embodiment shown in FIG. 4. Details are not described again.

Alternatively, for example, the communication apparatus 80 is configured to implement a function of a second RAN node. The communication apparatus 80 is, for example, the second RAN node in the embodiment shown in FIG. 7.

The processing module 802 is configured to: when a first area is to be covered, obtain information about a multicast/broadcast service. The information about the multicast/broadcast service indicates information about the first area and information about a first session associated with the first area, and the first session is a session of the multicast/broadcast service. For example, the processing module 802 may be configured to perform S701.

The processing module 802 is configured to set up or modify a resource of the multicast/broadcast service. For example, the processing module 802 may be configured to perform S702.

In a possible implementation, the first area includes at least one cell or tracking area; or the first area includes one or more areas in at least one cell.

In a possible implementation, the at least one cell includes a first cell, and any area of the one or more areas in the first cell is an area covered by a beam of the first cell, or is a geographical area covered by the first cell.

In a possible implementation, the processing module 802 is specifically configured to receive the information about the multicast/broadcast service from a core network element via the interface module 801; or the processing module 802 is specifically configured to receive the information about the multicast/broadcast service from a first radio access network node via the interface module 801.

In a possible implementation, the interface module 801 is further configured to send request information of the first session to the core network element.

In a possible implementation, the information about the first session is sent via a multicast/broadcast service session setup/modification request message.

When the communication apparatus 80 is configured to implement the function of the second RAN node, for other functions that can be implemented by the communication apparatus 80, refer to related descriptions of the embodiment shown in FIG. 7. Details are not described again.

Alternatively, for example, the communication apparatus 80 is configured to implement a function of a first RAN node/an access and mobility management network element. The communication apparatus 80 is, for example, the second RAN node/access and mobility management network element in the embodiment shown in FIG. 7.

The processing module 802 is configured to determine a first area associated with a first session. The first session is a session of the multicast/broadcast service.

The interface module 801 is configured to: when a second radio access network node is about to cover the first area, send information about a multicast/broadcast service to the second radio access network node. The information about the multicast/broadcast service indicates information about the first area and information about the first session, and the information about the multicast/broadcast service is used to set up or modify a resource of the multicast/broadcast service.

In a possible implementation, the first area includes at least one cell or tracking area; or the first area includes one or more areas in at least one cell.

In a possible implementation, the at least one cell includes a first cell, and any area of the one or more areas in the first cell is an area covered by a beam of the first cell, or is a geographical area covered by the first cell.

In a possible implementation, the information about the multicast/broadcast service is sent via a multicast/broadcast service session setup/modification request message.

When the communication apparatus 80 is configured to implement the function of the first RAN node/access and mobility management network element, for other functions that can be implemented by the communication apparatus 80, refer to related descriptions of the embodiment shown in FIG. 7. Details are not described again.

Alternatively, for example, the communication apparatus 80 is configured to implement a function of a terminal. The communication apparatus 80 is, for example, the terminal in the embodiment shown in FIG. 6.

The processing module 802 is configured to determine first indication information. The first indication information indicates multicast/broadcast service interest indication information corresponding to a first area.

The interface module 801 is configured to send the first indication information to a radio access network node. For example, the interface module 801 may be configured to perform S601.

In a possible implementation, the first area includes at least one cell or tracking area; or the first area includes one or more areas in at least one cell.

In a possible implementation, the at least one cell includes a first cell, and any area of the one or more areas in the first cell is an area covered by a beam of the first cell, or is a geographical area covered by the first cell.

In a possible implementation, the interface module 801 is further configured to receive second indication information from the radio access network node, where the second indication information indicates information about the first area.

In a possible implementation, the interface module 801 is specifically configured to send the first indication information to the radio access network node when entering the first area.

In a possible implementation, the second indication information is sent via a system information block 21.

When the communication apparatus 80 is configured to implement the function of the terminal, for other functions that can be implemented by the communication apparatus 80, refer to related descriptions of the embodiment shown in FIG. 6. Details are not described again.

Alternatively, for example, the communication apparatus 80 is configured to implement a function of a RAN node. The communication apparatus 80 is, for example, the RAN node in the embodiment shown in FIG. 6.

The interface module 801 is configured to receive first indication information from a terminal. The first indication information indicates multicast/broadcast service interest indication information corresponding to a first area. For example, the interface module 801 may be configured to perform S601.

The processing module 802 is configured to send information related to a multicast/broadcast service to the terminal based on the first indication information.

In a possible implementation, the first area includes at least one cell or tracking area; or the first area includes one or more areas in at least one cell.

In a possible implementation, the at least one cell includes a first cell, and any area of the one or more areas in the first cell is an area covered by a beam of the first cell, or is a geographical area covered by the first cell.

In a possible implementation, the interface module 801 is further configured to send second indication information to the terminal, where the second indication information indicates information about the first area.

In a possible implementation, the second indication information is sent via a system information block 21.

When the communication apparatus 80 is configured to implement the function of the RAN node, for other functions that can be implemented by the communication apparatus 80, refer to related descriptions of the embodiment shown in FIG. 6. Details are not described again.

In a simple embodiment, a person skilled in the art may figure out that the communication apparatus 80 may be in a form shown in FIG. 3. For example, the processor 301 in FIG. 3 may invoke the computer-executable instructions stored in the memory 303, to cause the communication apparatus 80 to perform the method in the foregoing embodiments.

For example, the functions/implementation processes of the interface module 801 and the processing module 802 in FIG. 8 may be implemented by the processor 301 in FIG. 3 by invoking the computer-executable instructions stored in the memory 303. Alternatively, the function/implementation process of the processing module 802 in FIG. 8 may be implemented by the processor 301 in FIG. 3 by invoking the computer-executable instructions stored in the memory 303, and the function/implementation process of the interface module 801 in FIG. 8 may be implemented by the transceiver 302 in FIG. 3.

It may be understood that one or more of the foregoing modules or units may be implemented by using software, hardware, or a combination thereof. When any one of the foregoing modules or units is implemented by software, the software exists in a form of computer program instructions, and is stored in the memory. The processor may be configured to execute the program instructions and implement the foregoing method procedure. The processor may be built in a system-on-a-chip (system-on-a-chip, SoC) or an ASIC, or may be an independent semiconductor chip. In addition to a core configured to execute software instructions to perform an operation or processing, the processor may further include a necessary hardware accelerator, for example, a field programmable gate array (field programmable gate array, FPGA), a programmable logic device (programmable logic device, PLD), or a logic circuit that implements a dedicated logic operation.

When the foregoing modules or units are implemented by using hardware, the hardware may be any one or any combination of a CPU, a microprocessor, a digital signal processing (digital signal processing, DSP) chip, a microcontroller unit (microcontroller unit, MCU), an artificial intelligence processor, an ASIC, a SoC, an FPGA, a PLD, a dedicated digital circuit, a hardware accelerator, or a non-integrated discrete device, and the hardware may run necessary software or does not depend on software to perform the foregoing method procedures.

Optionally, this application further provides a chip system, including at least one processor and an interface. The at least one processor is coupled to a memory through the interface, and when the at least one processor executes a computer program or instructions in the memory, the method in any one of the foregoing method embodiments is performed. In a possible implementation, the chip system further includes a memory. Optionally, the chip system may include a chip, or may include a chip and another discrete device. This is not specifically limited in this application.

Optionally, this application further provides a computer-readable storage medium. All or a part of procedures in the foregoing method embodiments may be implemented by a computer program instructing related hardware. The program may be stored in the foregoing computer-readable storage medium. When the program is executed, the procedures in the foregoing method embodiments may be included. The computer-readable storage medium may be an internal storage unit of the communication apparatus in any one of the foregoing embodiments, for example, a hard disk drive or a memory of the communication apparatus. Alternatively, the computer-readable storage medium may be an external storage device of the communication apparatus, for example, a plug-in hard disk, a smart media card (smart media card, SMC), a secure digital (secure digital, SD) card, or a flash card (flash card) that is configured on the communication apparatus. Further, the computer-readable storage medium may include both an internal storage unit and an external storage device of the communication apparatus. The computer-readable storage medium is configured to store the computer program and store other programs and data that are required by the communication apparatus. The computer-readable storage medium may be further configured to temporarily store data that has been output or is to be output.

Optionally, this application further provides a computer program product. All or a part of procedures in the foregoing method embodiments may be implemented by a computer program instructing related hardware. The program may be stored in the computer program product. When the program is executed, the procedures in the foregoing method embodiments may be included.

Optionally, this application further provides computer instructions. All or a part of procedures in the foregoing method embodiments may be completed by the computer instructions instructing related hardware (for example, a computer, a processor, an access and mobility management network element, a terminal, or a RAN node). The program may be stored in the computer-readable storage medium or the computer program product.

Optionally, this application further provides a communication system, including the first RAN node and the terminal in the method shown in FIG. 4. Optionally, the communication system further includes the access and mobility management network element and/or the second RAN node in the method shown in FIG. 4.

Optionally, this application further provides a communication system, including the RAN node and the terminal in the method shown in FIG. 6.

Optionally, this application further provides a communication system, including the second RAN node and the terminal in the method shown in FIG. 7. Optionally, the communication system further includes the access and mobility management network element and/or the first RAN node in the method shown in FIG. 7.

Based on the foregoing descriptions of the implementations, a person skilled in the art may clearly understand that for the purpose of convenient and brief descriptions, division into the foregoing functional modules is merely used as an example for description. During actual application, the foregoing functions can be allocated to different functional modules for implementation based on a requirement, that is, an inner structure of an apparatus is divided into different functional modules to implement all or a part of the functions described above.

In the several embodiments provided in this application, it should be understood that the disclosed apparatus and method may be implemented in other manners. For example, the described apparatus embodiments are merely examples. For example, division into the modules or the units is merely logical function division and may be other division in actual implementation. For example, a plurality of units or components may be combined or integrated into another apparatus, or some features may be ignored or not performed. In addition, the displayed or discussed mutual couplings, direct couplings, or communication connections may be implemented through some interfaces. The indirect couplings or communication connections between the apparatuses or units may be implemented in electronic, mechanical, or other forms.

The units described as separate parts may or may not be physically separate, and parts displayed as units may be one or more physical units, may be located in one place, or may be distributed in a plurality of different places. A part or all of the units may be selected based on actual requirements to achieve the objectives of the solutions of embodiments.

In addition, functional units in embodiments of this application may be integrated into one processing unit, or each of the units may exist alone physically, or two or more units are integrated into one unit. The integrated unit may be implemented in a form of hardware, or may be implemented in a form of a software functional unit.

The foregoing descriptions are merely specific implementations of this application, but are not intended to limit the protection scope of this application. Any variation or replacement within the technical scope disclosed in this application shall fall within the protection scope of this application. Therefore, the protection scope of this application shall be subject to the protection scope of the claims.

## Claims

1. A communication method, wherein the method comprises:
receiving first information from a first cell, wherein the first information indicates information about a first area; and
determining, based on the information about the first area, whether to process second information related to a first service, wherein
the first service is a public warning system service, and the second information is public warning information; or the first service is a multicast/broadcast service, and the second information indicates to receive information about the first service.

2. The method according to claim 1, wherein the first area comprises one or more areas in at least one cell, and the at least one cell comprises the first cell.

3. The method according to claim 2, wherein any area of one or more areas in the first cell is an area covered by a beam of the first cell, or is a geographical area covered by the first cell.

4. The method according to any one of claims 1 to 3, wherein the first service is the public warning system service, and the determining, based on the information about the first area, whether to process the second information related to the first service comprises:
if a terminal is located in the first area, processing the second information, wherein the processing comprises at least one of receiving, storing, assembling, or forwarding to a higher layer; or
if a terminal is not located in the first area, discarding the second information.

5. The method according to any one of claims 1 to 4, wherein the first service is the public warning system service, and the first information and the second information are sent via a system information block 6, a system information block 7, or a system information block 8.

6. The method according to any one of claims 1 to 3, wherein the first service is the multicast/broadcast service, and the first information and the second information are sent via a system information block 20, a system information block 21, or a multicast/broadcast service control channel change notification.

7. The method according to claim 6, wherein the first information and the second information are sent via the system information block 20, and the second information is multicast/broadcast service control channel configuration information; and
the determining, based on the information about the first area, whether to process the second information related to the first service comprises:
if a terminal is located in the first area, processing the second information; and
the processing the second information comprises: receiving multicast/broadcast service broadcast configuration information based on the second information.

8. The method according to claim 7, wherein the multicast/broadcast service broadcast configuration information comprises information about a second area, and the second area is an area associated with a multicast/broadcast service session supported by a serving cell and/or a neighboring cell; and the method further comprises:
if a second area of a reselected cell does not comprise the first area, entering a connected state and requesting to receive data in a unicast mode.

9. The method according to claim 6, wherein the first information and the second information are sent via the system information block 21, and the second information indicates a frequency of a multicast/broadcast service supported by the first area; and
the determining, based on the information about the first area, whether to process the second information related to the first service comprises:
if a terminal is located in the first area, processing the second information; and
the processing the second information comprises: setting the frequency of the multicast/broadcast service supported by the first area as a highest priority during cell reselection.

10. The method according to claim 6, wherein the first information and the second information are sent via the multicast/broadcast service control channel change notification, and the second information indicates a change in multicast/broadcast service control channel configuration information, and/or indicates a change in an area for receiving multicast/broadcast service control channel configuration information; and
the determining, based on the information about the first area, whether to process the second information related to the first service comprises:
if a terminal is located in the first area, processing the second information; and
the processing the second information comprises: receiving updated multicast/broadcast service control channel configuration information.

11. The method according to any one of claims 6 to 10, wherein the method further comprises:
if the terminal leaves the first area, stopping receiving the information about the first service.

12. A communication method, wherein the method comprises:
obtaining information about a first area; and
sending first information of a first cell and second information related to a first service to a terminal, wherein the first information indicates the information about the first area, and the first information is used by the terminal to determine whether to process the second information; and
the first service is a public warning system service, and the second information is public warning information; or the first service is a multicast/broadcast service, and the second information indicates to receive information about the first service.

13. The method according to claim 12, wherein the first area comprises one or more areas in at least one cell, and the at least one cell comprises the first cell.

14. The method according to claim 13, wherein any area of one or more areas in the first cell is an area covered by a beam of the first cell, or is a geographical area covered by the first cell.

15. The method according to any one of claims 12 to 14, wherein the obtaining the information about the first area comprises:
receiving the information about the first area from a core network element; or
receiving the information about the first area from a second radio access network node.

16. The method according to any one of claims 12 to 15, wherein the first service is the multicast/broadcast service, and the method further comprises:
sending multicast/broadcast service broadcast configuration information to the terminal, wherein the multicast/broadcast service broadcast configuration information comprises information about a second area, and the second area is an area associated with a multicast/broadcast service session supported by a serving cell and/or a neighboring cell.

17. The method according to any one of claims 12 to 16, wherein the first service is the multicast/broadcast service, and the first information and the second information are sent via a system information block 20, a system information block 21, or a multicast/broadcast service control channel change notification.

18. The method according to any one of claims 12 to 16, wherein the first service is the public warning service, and the first information and the second information are sent via a system information block 6, a system information block 7, or a system information block 8.

19. A communication method, wherein the method comprises:
determining information about a first area, wherein the information about the first area is used by a terminal to determine whether to process second information related to a first service; and the first service is a public warning system service, and the second information is public warning information; or the first service is a multicast/broadcast service, and the second information indicates to receive information about the first service; and
sending the information about the first area to first radio access network node.

20. The method according to claim 19, wherein the first area comprises one or more areas in at least one cell, and the at least one cell comprises a first cell.

21. The method according to claim 20, wherein any area of one or more areas in the first cell is an area covered by a beam of the first cell, or is a geographical area covered by the first cell.

22. The method according to any one of claims 19 to 21, wherein the method further comprises:
when the first radio access network node is about to cover the first area, sending third information to the first radio access network node, wherein the third information is used to request the first radio access network node to set up a resource related to the first service.

23. The method according to any one of claims 19 to 22, wherein the sending the information about the first area to the first radio access network node comprises:
when the first radio access network node is about to cover the first area, sending the information about the first area to the first radio access network node.

24. A communication apparatus, comprising a unit or a module configured to perform the method according to any one of claims 1 to 11, comprising a unit or a module configured to perform the method according to any one of claims 12 to 18, or comprising a unit or a module configured to perform the method according to any one of claims 19 to 23.

25. A communication apparatus, comprising a processor, wherein the processor is coupled to a memory, the memory is configured to store a program or instructions, and when the program or the instructions are executed by the processor, the apparatus is caused to perform the method according to any one of claims 1 to 11, perform the method according to any one of claims 12 to 18, or perform the method according to any one of claims 19 to 23.

26. A computer-readable storage medium, wherein the computer-readable storage medium stores a computer program or instructions, and when the computer program or the instructions are executed, a computer is caused to perform the method according to any one of claims 1 to 11, the method according to any one of claims 12 to 18, or the method according to any one of claims 19 to 23.

27. A computer program product, wherein the computer program product comprises computer program code, and when the computer program code is run on a computer, the computer is caused to implement the method according to any one of claims 1 to 11, implement the method according to any one of claims 12 to 18, or implement the method according to any one of claims 19 to 23.
